(19) Europäisches Patentamt
European Patent Office
Office européen des brevets

(11) **EP 4 572 430 A1**

(12) **EUROPEAN PATENT APPLICATION**
published in accordance with Art. 153(4) EPC

(43) Date of publication:
**18.06.2025 Bulletin 2025/25**

(21) Application number: **23851709.8**

(22) Date of filing: **04.08.2023**

(51) International Patent Classification (IPC):
***H04W 52/18*** (2009.01)

(52) Cooperative Patent Classification (CPC):
**H04W 52/18; H04W 52/24**

(86) International application number:
**PCT/CN2023/111192**

(87) International publication number:
**WO 2024/032488 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.08.2022 CN 202210956557**

(71) Applicant: **Vivo Mobile Communication Co., Ltd.
Dongguan, Guangdong 523863 (CN)**

(72) Inventors:
• **LIU, Siqi**
  **Dongguan, Guangdong 523863 (CN)**
• **JI, Zichao**
  **Dongguan, Guangdong 523863 (CN)**
• **LI, Gen**
  **Dongguan, Guangdong 523863 (CN)**

(74) Representative: **Lavoix
Bayerstraße 83
80335 München (DE)**

(54) **TRANSMISSION POWER DETERMINATION METHOD, AND TERMINAL AND STORAGE MEDIUM**

(57)    This application discloses a transmit power determining method, a terminal, and a storage medium, pertaining to the field of communications technologies. The transmit power determining method of the embodiments of this application includes: determining or obtaining, by a terminal, first power information, where the first power information includes at least one of the following: an SL reference power, an SL nominal power, and an UL nominal power; and determining, by the terminal, the SL transmit power based on the first power information.

```
                    ┌──────────────┐
                    │    Start     │
                    └──────┬───────┘
                           │
                           ▼
    ┌──────────────────────────────────────────────┐
    │ A terminal determines or obtains first power   │───── 201
    │ information                                    │
    └──────────────────────┬─────────────────────────┘
                           │
                           ▼
    ┌──────────────────────────────────────────────┐
    │ The terminal determines an SL transmit power   │───── 202
    │ based on the first power information           │
    └──────────────────────┬─────────────────────────┘
                           │
                           ▼
                    ┌──────────────┐
                    │     End      │
                    └──────────────┘
```

FIG. 2

Processed by Luminess, 75001 PARIS (FR)

EP 4 572 430 A1

**Description**

**CROSS-REFERENCE TO RELATED APPLICATIONS**

This application claims priority to Chinese Patent Application No. 202210956557.7 filed in China on August 10, 2022, which is incorporated herein by reference in its entirety.

**TECHNICAL FIELD**

This application pertains to the field of communications technologies, and specifically relates to a transmit power determining method, a terminal, and a storage medium.

**BACKGROUND**

At present, some communication systems support sidelink (sidelink, or referred to as secondary link, side link, or the like, SL for short), that is, terminals can directly transmit data at a physical layer. However, at present, a transmit power related to SL, such as an SL transmit power, or how to determine a transmit power of an SL channel or SL signal has not been determined, and a transmit power of a Uu interface (such as an uplink transmit power or a downlink transmit power) may not be suitable for SL transmission, resulting in poor SL transmission performance of a terminal.

**SUMMARY**

Embodiments of this application provide a transmit power determining method, a terminal, and a storage medium, which can resolve a problem of poor SL transmission performance of the terminal.

According to a first aspect, a transmit power determining method is provided, including:

determining or obtaining, by a terminal, first power information, where the first power information includes at least one of the following: an SL reference power, an SL nominal power, and an uplink (uplink, UL) nominal power; and
determining, by the terminal, an SL transmit power based on the first power information.

According to a second aspect, a transmit power determining method is provided, including:

determining or obtaining, by a terminal, a sidelink SL maximum transmit power; and
determining, by the terminal, a transmit power of a first channel or a first signal based on the SL maximum transmit power, where the first channel or the first signal includes at least one of a sidelink primary synchronization signal (Sidelink Primary Synchronization signal, S-PSS), a sidelink secondary synchronization signal (Sidelink Secondary Synchronization Signal) S-SSS, and a physical sidelink broadcast channel (Physical Sidelink Broadcast Channel, PSBCH); where
the SL maximum transmit power includes at least one of the following:

an SL maximum transmission power corresponding to a first resource pool;
an SL maximum transmit power corresponding to the first resource pool;
a maximum Uu interface transmit power; and
a maximum transmit power of the first channel or the first signal.

According to a third aspect, a transmit power determining apparatus is provided, including:

an information module, configured to determine or obtain first power information, where the first power information includes at least one of the following: a sidelink SL reference power, an SL nominal power, and an uplink UL nominal power; and
a first determining module, configured to determine an SL transmit power based on the first power information.

According to a fourth aspect, a transmit power determining apparatus is provided, including:

a power module, configured to determine or obtain a sidelink SL maximum transmit power; and
a determining module, configured to determine a transmit power of a first channel or a first signal based on the SL maximum transmit power, where the first channel or the first signal includes at least one of a sidelink primary synchronization signal S-PSS, a sidelink secondary synchronization signal S-SSS, and a physical sidelink broadcast channel PSBCH; where

the SL maximum transmit power includes at least one of the following:

an SL maximum transmission power corresponding to a first resource pool;
an SL maximum transmit power corresponding to the first resource pool;
a maximum Uu interface transmit power; and
a maximum transmit power of the first channel or the first signal.

According to a fifth aspect, a terminal is provided, where the terminal includes a processor and a memory, where a program or instructions capable of running on the processor are stored in the memory. When the program or the instructions are executed by the processor, the steps of the method according to the first aspect or the second aspect are implemented.

According to a sixth aspect, a terminal is provided, including a processor and a communication interface, where the processor is configured to determine or obtain first power information, where the first power information includes at least one of the following: a sidelink SL reference power, an SL nominal power, and an uplink UL nominal power; and determine an SL transmit power based on the first power information.

According to a seventh aspect, a terminal is provided, including a processor and a communication interface, where the processor is configured to determine or obtain a sidelink SL maximum transmit power; and determine a transmit power of a first channel or a first signal based on the SL maximum transmit power, where the first channel or the first signal includes at least one of a sidelink primary synchronization signal S-PSS, a sidelink secondary synchronization signal S-SSS, and a physical sidelink broadcast channel PSBCH; where the SL maximum transmit power includes at least one of the following: an SL maximum transmission power corresponding to a first resource pool; an SL maximum transmit power corresponding to the first resource pool; a maximum Uu interface transmit power; and a maximum transmit power of the first channel or the first signal.

According to an eighth aspect, a readable storage medium is provided, where a program or instructions are stored in the readable storage medium, and in a case that the program or the instructions are executed by a processor, the steps of the method according to the first aspect are implemented, or the steps of the method according to the second aspect are implemented.

According to a ninth aspect, a chip is provided, where the chip includes a processor and a communication interface, the communication interface is coupled to the processor, and the processor is configured to run a program or an instruction to implement the method according to the first aspect or the method according to the second aspect.

According to a tenth aspect, a computer program/program product is provided, where the computer program/program product is stored in a storage medium, and the computer program/program product is executed by at least one processor to implement the steps of the method according to the first aspect, or the computer program/program product is executed by at least one processor to implement the steps of the method according to the second aspect.

In the embodiments of this application, the terminal determines or obtains the first power information, where the first power information includes at least one of the following: an SL reference power, an SL nominal power, and an UL nominal power; and the terminal determines the SL transmit power based on the first power information. In this way, the SL transmit power can be determined based on at least one of the SL reference power, the SL nominal power, and the UL nominal power, thereby improving the SL transmission performance of the terminal.

## BRIEF DESCRIPTION OF DRAWINGS

FIG. 1 is a block diagram of a wireless communication system to which embodiments of this application are applicable;
FIG. 2 is a flowchart of a transmit power determining method according to an embodiment of this application;
FIG. 3 is a flowchart of another transmit power determining method according to an embodiment of this application;
FIG. 4 is a structural diagram of a transmit power determining apparatus according to an embodiment of this application;
FIG. 5 is a structural diagram of a transmit power determining apparatus according to an embodiment of this application;
FIG. 6 is a structural diagram of a communication device according to an embodiment of this application; and
FIG. 7 is a structural diagram of a terminal according to an embodiment of this application.

## DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

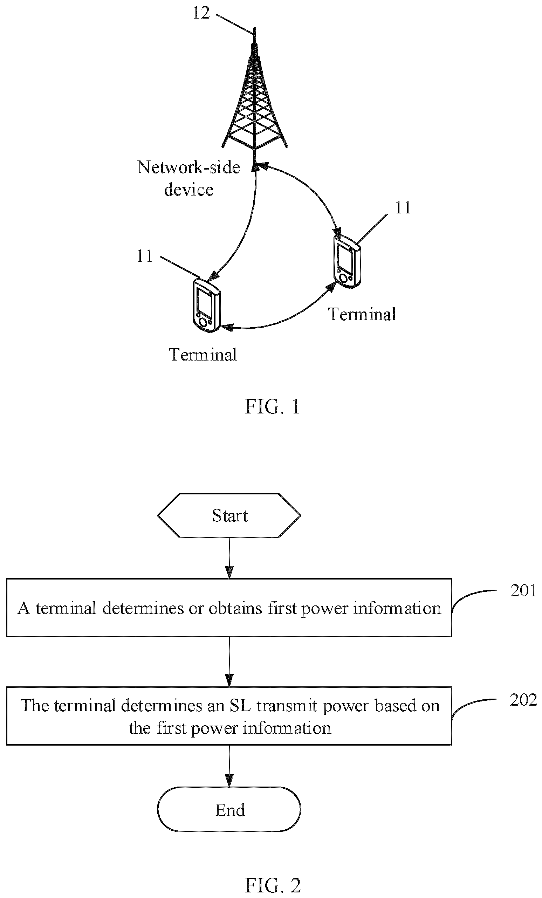

FIG. 1 is a block diagram of a wireless communication system to which the embodiments of this application are applicable. The wireless communication system includes a terminal 11 and a network-side device 12. The terminal 11 may be a mobile phone, a tablet computer (Tablet Personal Computer), a laptop computer (Laptop Computer), a personal digital assistant (personal digital assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application.

In the embodiments of this application, SL transmission can be performed between the terminals 11, that is, data transmission can be directly performed at the physical layer between the terminals 11. SL transmission between the terminals 11 may be broadcast, unicast, multicast or groupcast. The terminals for SL transmission may all be online or offline, or some devices may be online and some devices may be offline.

The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

The following specifically describes a transmit power determining method, a terminal, and a storage medium provided in the embodiments of this application through specific embodiments and application scenarios thereof with reference to the accompanying drawings.

Referring to FIG. 2, FIG. 2 is a flowchart of a transmit power determining method according to an embodiment of this application. As shown in FIG. 2, the method includes the following steps.

Step 201: A terminal determines or obtains first power information, where the first power information includes at least one of the following: an SL reference power, an SL nominal power, and an UL nominal power.

In this embodiment of this application, the first power information may also be referred to as a power component (component) or a power parameter (parameter).

In this embodiment of this application, the SL reference power may also be referred to as an SL basic power or an SL initial transmit power. In addition, the SL reference power may be referred to as P0_SL. In addition, the SL reference power may be power information newly defined in the protocol according to this embodiment of this application.

In this embodiment of this application, the SL nominal power may also be referred to as an SL rated power or an SL initial transmit nominal power. In addition, the SL nominal power may be referred to as P0nominal_SL or P0_SL nominal. In addition, the SL nominal power may be power information newly defined in the protocol according to this embodiment of this application.

In this embodiment of this application, the UL nominal power may also be referred to as an UL rated power, or may also be referred to as an UL initial transmit nominal power. In addition, the UL nominal power may be referred to as P0nominal_UL or P0_UL nominal.

The terminal may determine or obtain the first power information by itself, or determine the first power information based on a parameter, or receive first power information sent by other devices.

Step 202: The terminal determines an SL transmit power based on the first power information.

The determining the SL transmit power based on the first power information may be obtaining the SL transmit power through deduction based on at least one of the SL reference power, the SL nominal power, and the UL nominal power.

In this embodiment of this application, the SL transmit power can be determined based on at least one of the SL reference power, the SL nominal power, and the UL nominal power through the foregoing steps, thereby improving the SL transmission performance of the terminal.

In addition, in this embodiment of this application, the SL reference power may be a newly introduced value of reference power (P0) in the embodiments of this application, or an UL P0 is used, and a value range of this parameter may be much smaller than a preset P0. In this way, with the SL transmit power determined based on the SL reference power, it can be ensured that the SL transmit power is not excessively large, so as to resolve the problem that the SL transmit power may be much larger than the UL power or the SL transmit power is much larger than an appropriate transmission power, causing strong interference to Uu or other terminals.

It should be noted that in this embodiment of this application, the preset P0 may be referred to as P0, and its value range is [-16,15].

In this embodiment of this application, the SL nominal power may be a newly introduced value P0nominal_SL, which can avoid the problem of an excessively large transmit power caused by the SL transmit power that is determined based on the preset P0, so as to avoid strong interference to Uu or other terminals.

In this embodiment of this application, the SL transmit power can be determined based on the UL nominal power, which can avoid the problem of an excessively large transmit power caused by the SL transmit power that is determined based on the preset P0, so as to avoid strong interference to Uu or other terminals.

In an optional implementation, the first power information is power information of a target resource pool. The target resource pool is a resource pool for an SL signal to be transmitted is located, or the target resource pool is a resource pool corresponding to an SL maximum transmit power used during determining of a transmit power.

The target resource pool may be a resource pool, and the resource pool may be a resource pool in which the SL signal to be transmitted is located, or a resource pool corresponding to an SL maximum transmit power used during determining of a power.

For example, for a transmit power of a physical sidelink shared channel (Physical SideLink Shared Channel, PSSCH), a physical sidelink control channel (Physical SideLink Control Channel, PSCCH), a reference signal (Reference Signal, RS) and a physical sidelink feedback channel (Physical SideLink Feedback Channel, PSFCH), the transmit power can be determined based on first power information (such as P0 and or P0_SL nominal) corresponding to a same resource pool, or, for example, the transmit power is determined based on the first power information (such as P0_SL and or P0_SL nominal) corresponding to the same resource pool. That is, if the first power information contains at least two items, the two items are for a same resource pool.

For another example, for a sidelink synchronization signal block (SideLink Synchronization Signal Block, S-SSB), a transmit power of the S-SSB can be determined based on an SL maximum transmit power of a specific resource pool. This resource pool may be a first resource pool described later in this embodiment of this application.

In this implementation, because the target resource pool is a resource pool for an SL signal to be transmitted is located, or the target resource pool is a resource pool corresponding to an SL maximum transmit power used during determining of a transmit power, the SL transmit power is determined based on power information of the target resource pool, so as to make the SL transmit power more suitable.

In an optional implementation, the value range of the SL reference power includes values less than or equal to -16.

In another optional implementation, the value range of the SL reference power may specifically be [-202,24].

That the value range of the SL reference power includes values less than or equal to -16 can be understood that values less than or equal to -16 and values greater than -16 are present in the value range of the SL reference power, for example, the value range of the SL reference power is [-202,24] or [-202,-60] or [-218,39] or [-202,-15] or [-218,-45].

Because the value range of the SL reference power includes the values less than or equal to -16, it can avoid an excessive SL transmit power and reduce the interference.

In an optional implementation, the SL reference power includes:

an SL reference power indicated by a first parameter.

The first parameter may be an SL parameter newly introduced in this embodiment of this application, or may be an extension IE (extension IE) newly introduced in this embodiment of this application, or may be a parameter other than dl-PO-PSBCH-r16, sl-P0-PSSCH-PSCCH-r16, dl-P0-PSSCH-PSCCH-r16, and dl-PO-PSFCH-r16.

Optionally, the first parameter is used for at least one of the following:

indicating an SL reference power for a case that the SL transmit power is determined based on a downlink DL pathloss;
indicating an SL reference power for a case that the SL transmit power is determined based on an SL pathloss;
indicating an SL reference power of a PSSCH;
indicating an SL reference power of a PSCCH;
indicating an SL reference power of a PSFCH;
indicating an SL reference power of a physical sidelink broadcast channel (Physical SideLink Broadcast Channel, PSBCH); and
indicating an SL reference power of an RS.

In this implementation, the first parameter may include at least one of the following:

a parameter indicating an SL reference power used in a case that the SL transmit power is determined based on a downlink (Downlink, DL) pathloss;
a parameter indicating an SL reference power used in a case that the SL transmit power is determined based on an SL pathloss;
a parameter indicating an SL reference power of a physical sidelink shared channel PSSCH;
a parameter indicating the SL reference power of the physical sidelink control channel PSCCH;
a parameter indicating an SL reference power of a physical sidelink feedback channel PSFCH;
a parameter indicating an SL reference power of a PSBCH; and
a parameter indicating an SL reference power of an RS.

For example, the first parameter includes a first parameter A for indicating P0_SL used in a case that the SL transmit power is determined based on a DL pathloss, and a first parameter B for indicating P0_SL used in a case that the SL transmit power is determined based on an SL pathloss, that is, there are two parameters for indicating P0_SL in two cases respectively.

Alternatively, different channels have their own first parameters, or the first parameter includes at least one of the following: a first parameter C corresponding to a PSSCH/PSCCH, a first parameter D corresponding to a PSFCH, a first parameter E corresponding to a PSBCH, and a first parameter F corresponding to an RS.

In addition, the first parameter may be a parameter configured by the terminal or a parameter received by the terminal, which is not limited herein.

In this implementation, it is possible to configure the SL reference power through the first parameter, thereby improving the flexibility of the SL reference power.

In an optional implementation, the SL reference power includes:

an SL reference power that is determined based on at least one of a reference power corresponding to UL and a nominal power corresponding to UL.

The reference power corresponding to the UL can be understood as P0 corresponding to the UL, and the nominal power corresponding to the UL can be understood as PO_nominal corresponding to the UL.

For example, the SL reference power may be a value of a reference power corresponding to the UL that is corresponding to a physical uplink control channel (Physical Uplink Control Channel, PUCCH), a physical uplink shared channel (Physical Uplink Shared Channel, PUSCH), a sounding reference signal (Sounding Reference Signal, SRS), a physical random access channel (Physical Random Access Channel, PRACH), a message A (msgA), and a message B (msgB).

Alternatively, the SL reference power may be a reference power configured for an SRS.

Alternatively, the SL reference power may be equal to a UL reference power.

Alternatively, the SL reference power may be equal to a reference power+nominal power (P0+P0_nominal) of the UL.

The SL reference power may be equal to a transmit power of the last PRACH.

In an optional implementation, the determining, by the terminal, an SL transmit power based on the first power information includes:

determining the SL transmit power based on at least one of the SL reference power and the SL nominal power.

For example, the determining, by the terminal, an SL transmit power based on the first power information may include:

under a first condition, determining, by the terminal, the SL transmit power at least based on the SL reference power; where

the first condition includes at least one of the following:

the terminal has obtained the first parameter;
the terminal has obtained the SL reference power; and
the terminal has not obtained a preset SL reference power.

In another optional implementation, the determining, by the terminal, an SL transmit power based on the first power information includes:

if the terminal obtains the first parameter, determining, by the terminal, the SL transmit power at least based on the SL reference power.

The obtaining the first parameter and the SL reference power may be that the first parameter and the SL reference power are configured for the terminal.

Having not obtained the preset SL reference power may be that the preset SL reference power is not configured for the terminal. The preset SL reference power can be understood as a preset SL parameter P0, such as at least one of the following:

dl-P0-PSBCH-r16, sl-P0-PSSCH-PSCCH-r16, dl-P0-PSSCH-PSCCH-r16, and dl-P0-PSFCH-r16.

In this implementation, the determining, by the terminal, the SL transmit power at least based on the SL reference power may include at least one of the following:

determining the SL transmit power at least based on the SL reference power;
determining the SL transmit power based on the SL reference power and the SL nominal power; and
determining the SL transmit power based on the SL reference power and the UL nominal power;

In an optional implementation, the method further includes:

under a second condition, determining, by the terminal, the SL transmit power at least based on a preset SL reference power; or

under the second condition, determining, by the terminal, the SL transmit power based on an SL reference power of 0.

The second condition includes at least one of the following:

the terminal has not obtained the first parameter; and
the terminal has not obtained the SL reference power.

In another optional implementation, the method further includes:

if the terminal has not obtained the first parameter, determining, by the terminal, the SL transmit power at least based on a preset SL reference power.

The determining, by the terminal, the SL transmit power based on an SL reference power of 0 may be considering that the SL reference power or the preset SL reference power is equal to 0 under the second condition.

In this implementation, the SL transmit power can be determined based on the preset SL reference power or based on the SL reference power of 0 under the second condition, so as to avoid the problem that the terminal cannot determine the SL transmit power in a case that the first parameter and the SL reference power have not been obtained.

For example, if the terminal has not obtained/is not configured with the first parameter/SL reference power, the SL transmit power is determined at least using the preset SL parameter P0 (that is, the preset SL reference power), for example, the SL transmit power is determined based on at least one of dl-P0-PSBCH-r16, sl-P0-PSSCH-PSCCH-r16, dl-P0-PSSCH-PSCCH-r16, and dl-P0-PSFCH-r16. Specifically, the following manners may be included:

> determining the SL transmit power based on the preset SL parameter P0;
> determining the SL transmit power based on the SL nominal power;
> determining the SL transmit power based on the preset SL parameter P0 and the SL nominal power; and
> determining the SL transmit power based on the SL nominal power, or the preset SL parameter P0 and the UL nominal power.

In an optional implementation, the determining, by the terminal, an SL transmit power based on the first power information includes:

> determining, by the terminal, the SL transmit power based on the SL nominal power; or
> determining, by the terminal, the SL transmit power based on the SL nominal power and the SL reference power.

Optionally, a value range of the SL nominal power includes [-202,24] or [-202,-60]. The value range of the SL nominal power includes [-202,24] or [-202,-60]; therefore, it can be ensured that the SL transmit power determined based on the SL nominal power may not be too large to cause strong interference to Uu or other terminals.

It should be noted that in some embodiments, the value of the SL nominal power may alternatively be other values, such as [-202,15] or [-202,-16].

The SL reference power may be an SL reference power indicated by the first parameter; or, the SL reference power is a preset SL parameter P0, such as dl-PO-PSBCH-r16, sl-P0-PSSCH-PSCCH-r16, dl-P0-PSSCH-PSCCH-r16, and dl-PO-PSFCH-r16.

Optionally, the SL nominal power includes:

an SL nominal power indicated by a second parameter.

The second parameter may be used for at least one of the following:

> indicating an SL nominal power for the case that the SL transmit power is determined based on a DL pathloss;
> indicating an SL nominal power for the case that the SL transmit power is determined based on an SL pathloss;
> indicating an SL nominal power of a physical sidelink shared channel PSSCH;
> indicating an SL nominal power of a physical sidelink control channel PSCCH;
> indicating an SL nominal power of a physical sidelink feedback channel PSFCH;
> indicating an SL nominal power of a physical sidelink broadcast channel PSBCH; and
> indicating an SL nominal power of an RS.

The second parameter may be an SL parameter or an extension IE newly introduced in this embodiment of this application, or the second parameter may be understood as a parameter other than other than dl-P0-PSBCH-r16, sl-P0-PSSCH-PSCCH-r16, dl-P0-PSSCH-PSCCH-r16, and dl-P0-PSFCH-r16.

In this implementation, the second parameter may include at least one of the following:

> a parameter indicating an SL nominal power used in a case that the SL transmit power is determined based on a DL pathloss;
> a parameter indicating an SL nominal power used in a case that the SL transmit power is determined based on an SL pathloss;
> a parameter indicating an SL nominal power of a PSSCH;
> a parameter indicating an SL nominal power of a PSCCH;
> a parameter indicating an SL nominal power of a PSFCH;
> a parameter indicating an SL nominal power of a PSBCH; and
> a parameter indicating an SL nominal power of an RS.

For example, the second parameter includes a second parameter G for indicating an SL nominal power used in a case that the SL transmit power is determined based on a DL pathloss, and a second parameter H for indicating the SL nominal power used in a case that the SL transmit power is determined based on an SL pathloss, that is, there are two parameters for indicating the SL nominal power in two cases respectively.

Alternatively, different channels have their own second parameters, or the second parameter includes at least one of the following: a first parameter I corresponding to a PSSCH/PSCCH, a second parameter J corresponding to a PSFCH, a second parameter K corresponding to a PSBCH, and a second parameter L corresponding to an RS.

In an optional implementation, the method further includes:

under a third condition, determining, by the terminal, the SL transmit power based on an SL nominal power of 0; or under the third condition, determining, by the terminal, the SL transmit power at least based on a preset SL reference power; or

under the third condition, determining, by the terminal, the SL transmit power at least based on the SL reference power; or

under the third condition, determining, by the terminal, the SL transmit power at least based on the UL nominal power; where

the third condition includes at least one of the following:

the terminal has not obtained the second parameter;
the terminal has not obtained the SL nominal power; and
the terminal has obtained that the UL nominal power.

In this implementation, in a case that the second parameter or the SL nominal power has not been obtained or configured, it can be implemented that the SL nominal power is considered to be equal to 0, or the SL transmit power is determined based on the preset SL reference power, or the SL transmit power is determined based on the SL reference power, or the SL transmit power is determined based on the UL nominal power. This can avoid the problem that the terminal cannot determine the SL transmit power in a case that the second parameter and the SL nominal power has not been obtained.

In an optional implementation, the determining, by the terminal, an SL transmit power based on the first power information includes:

under a fourth condition, determining, by the terminal, the SL transmit power based on the SL nominal power; or under the fourth condition, determining, by the terminal, the SL transmit power based on the SL nominal power and the SL reference power; where

the fourth condition includes at least one of the following:

the terminal has not obtained the first parameter indicating the SL reference power;
the terminal has not obtained a preset SL reference power;
the SL reference power is assumed to be 0; and
the terminal does not consider the SL reference power.

In this implementation, in a case that the first parameter or preset SL parameter P0 has not been obtained, or that the SL reference power is assumed to be 0, or that the SL reference power is not considered, the terminal can determine the SL transmit power based on the SL nominal power or determine the SL transmit power based on the SL nominal power and the SL reference power.

In an optional implementation, the determining, by the terminal, an SL transmit power based on the first power information includes:

determining, by the terminal, the SL transmit power based on the UL nominal power; or
determining, by the terminal, the SL transmit power based on the UL nominal power and the SL reference power; or
determining, by the terminal, the SL transmit power based on the UL nominal power and a preset SL reference power.

Optionally, the UL nominal power includes:

a nominal power corresponding to UL; where
the UL includes at least one of the following:

a PUCCH;
a PUSCH;
an SRS;
a PRACH;

msgA;

an UL corresponding to msgB;

a dedicated UL;

a common UL;

an UL scheduled by a specific DCI format;

an UL scheduled by downlink control information (Downlink Control Information, DCI) of a cell in which an RS used for calculating a DL pathloss is located;

an UL scheduled by DCI of a cell in which a synchronization signal block (Synchronization Signal Block, SSB) for calculating a DL pathloss is located;

an UL on a supplementing uplink (Supplementary Uplink, SUL) carrier;

an UL on a first cell group (Cell Group, CG);

an UL on a first carrier; and

an UL on a first cell.

The nominal power corresponding to the UL may be a nominal power used during determining of the UL transmit power.

The dedicated UL may be an UL assigned to a terminal. For example, the dedicated UL is a dedicated (dedicated) configured UL or an UL transmitted using a dedicated configured parameter, such as a dedicated configured (configdedicated) UL, a PUSCH configuration (PUSCH-Config) UL, or a PUSCH power control (PUSCH-PowerControl) UL; or, the dedicated UL is an UL transmitted using a dedicated configured parameter.

The common UL may be an UL that can be shared by multiple terminals. For example, the common UL is a common configured UL, such as a common configured (ConfigCommon) UL, a PUSCH-Configcommon (PUSCH-Configcommon) UL, a PUCCH-Configcommon (PUCCH-Configcommon) UL, or an UL transmitted using a common configured parameter.

The specific DCI format can be a predefined DCI format, such as DCI format 0-0 (DCI format 0-0).

The UL scheduled by DCI of a cell in which an RS used for calculating a DL pathloss is located may be that: in a case that the SL transmit power is determined based on the DL pathloss, the UL is an UL scheduled by the DCI of the cell in which the RS for calculating the DL pathloss.

The UL scheduled by DCI of a cell in which a synchronization signal block SSB used for calculating a DL pathloss is located may be that: in a case that the SL transmit power is determined based on the DL pathloss, the UL is an UL scheduled by the DCI of the cell in which the synchronization signal block SSB for calculating the DL pathloss.

Optionally, the UL corresponding to the PUSCH includes at least one of the following:

an UL scheduled by a DCI format 0-0;

an UL transmitted on a configured grant;

an UL without configured initial transmit power;

an UL in a case that the sounding reference signal resource indicator (SRS resource indicator, SRI) configuration is not obtained;

an UL scheduled by DCI including no SRI; and

an UL corresponding to a specific number.

J for calculating the transmit power is defined in a specific numbering protocol, and the specific number is J being equal to 0/1/2.

In some implementations, the UL nominal power includes one of the following:

a dedicated or common or cell-level power value;

a nominal power related to a grant or a nominal power with a grant (p0-NominalWithGrant);

a nominal power unrelated to a grant or a nominal power without a grant (p0-NominalWithoutGrant);

a preset nominal power (p0-nominal);

a preset reference power (p0), such as P0 of SRS;

a preamble received target power (PREAMBLE_RECEIVED_TARGET_POWER); and

a power of a last PRACH transmission.

Optionally, in a case that the SL transmit power is a PSFCH transmit power, the UL is a PUCCH; or

in a case that the SL transmit power is a PSCCH, PSSCH or RS transmit power, the UL is a PUSCH; or

in a case that the SL transmit power is an S-SSB transmit power, the UL is a PRACH.

In this implementation, it can be implemented that if a PSFCH transmit power is determined, the UL is a PUCCH, if a PSCCH/PSSCH/RS transmit power is determined, the UL is a PUSCH, or if an S-SSB transmit power is determined, the UL is a PRACH.

Optionally, the first CG includes at least one of the following:

a master cell group (Master Cell Group, MCG);
a CG in which SL DCI is located, or a CG configured with SL DCI;
a CG in which an SL bandwidth part (Bandwidth Part, BWP) is located, or a CG configured with an SL BWP, or a CG associated with an SL BWP; and
a CG in which an UL BWP corresponding to an SL BWP is located, or a CG configured with an UL BWP corresponding to an SL BWP, or a CG of an UL BWP which is associated with an SL BWP;
and/or
the first carrier includes at least one of the following:

a primary carrier;
a carrier on which SL DCI is located, or a carrier configured with SL DCI;
a carrier on which an SL BWP is located, or a carrier configured with an SL BWP, or a carrier associated with an SL BWP;
a carrier on which an UL BWP corresponding to an SL BWP is located, or a carrier configured with an UL BWP corresponding to an SL BWP, or a carrier of an UL BWP which is associated with an SL BWP;
a carrier corresponding to a largest carrier identifier in carrier identifiers obtained by the terminal;
a carrier corresponding to a smallest carrier identifier in the carrier identifiers obtained by the terminal; and
a carrier corresponding to a specific carrier identifier in the carrier identifiers obtained by the terminal;
and/or
the first cell includes at least one of the following:

a primary cell;
a cell in which SL DCI is located, or a cell configured with SL DCI;
a cell in which a specific DCI format is located, or a cell configured with a specific DCI format;
a cell in which an UL scheduled by a specific DCI format is located;
a cell in which an SL BWP is located, or a cell configured with an SL BWP, or a cell associated with an SL BWP;
a cell in which an UL BWP corresponding to an SL BWP is located, or a cell configured with an UL BWP corresponding to an SL BWP, or a cell associated with an UL BWP of an SL BWP;
a cell corresponding to a largest cell identifier in cell identifiers obtained by the terminal;
a cell corresponding to a smallest cell identifier in the cell identifiers obtained by the terminal; and
a cell corresponding to a specific cell identifier in the cell identifiers obtained by the terminal.

The SL DCI is DCI for scheduling or indicating or activating or deactivating an SL resource, such as DCI format 3-0 or DCI format 3-1.

The UL BWP corresponding to the SL BWP may alternatively be understood as an UL BWP that at least partially overlaps with the SL BWP.

The CG associated with the SL BWP can be understood as that the SL BWP is on the CG.

The UL BWP associated with the SL BWP can be understood as that the SL BWP is on the UL BWP.

The cell associated with the SL BWP can be understood as that the SL BWP is on the cell.

The specific DCI format may be a specific DCI format defined in advance or defined in a protocol, such as DCI format 0-0.

The UL scheduled by the specific DCI format may be a PUSCH scheduled in the specific DCI format, such as a PUSCH scheduled in DCI format 0-0.

Optionally, the UL nominal power includes:

an UL nominal power corresponding to a latest UL BWP transmission; or
an UL nominal power corresponding to a previous or last UL BWP transmission before a first SL transmission; or
an UL nominal power corresponding to a latest UL transmission; or
an UL nominal power corresponding to a previous or last UL transmission before the first SL transmission; or
an UL nominal power corresponding to a next or 1st UL BWP transmission before the first SL transmission; or
an UL nominal power corresponding to a next or 1st UL transmission before the first SL transmission.

It should be noted that in this embodiment of this application, SL transmission may be SL sending or SL reception.

The UL nominal power corresponding to the latest UL BWP transmission may include:

an UL nominal power corresponding to a latest UL BWP transmission before a first SL transmission; or
an UL nominal power corresponding to a latest UL BWP transmission after a first SL transmission.

The latest UL BWP transmission before the first SL transmission may be an UL BWP transmission with the latest time before the first SL transmission.

The latest UL BWP transmission after the first SL transmission may be an UL BWP transmission with the latest time after the first SL transmission.

The UL nominal power corresponding to the latest UL transmission may include:

an UL nominal power corresponding to a latest UL transmission before a first SL resource; or
an UL nominal power corresponding to a latest UL transmission after a first SL resource; or
an UL nominal power corresponding to a previous or last UL transmission.

The UL nominal power corresponding to the previous or last UL BWP transmission may be an UL nominal power corresponding to a previous or last UL BWP transmission before the first SL transmission.

The UL nominal power corresponding to the previous or last UL transmission may be an UL nominal power corresponding to a previous or last UL transmission before the first SL resource.

The UL nominal power corresponding to the next or 1st UL BWP transmission may be an UL nominal power corresponding to the next or 1st UL BWP transmission before the first SL transmission.

The UL nominal power corresponding to the next or 1st UL transmission may be an UL nominal power corresponding to the next or 1st UL transmission before the first SL resource.

The first SL transmission may be SL sending or SL reception.

The first SL transmission may include a current SL transmission or a previous SL transmission.

The first SL resource may include a resource used for the current SL transmission or a resource used for the previous SL transmission.

In the foregoing implementation, the UL nominal power can be determined flexibly.

In an optional implementation, the UL nominal power includes:

an UL nominal power indicated by a third parameter.

The third parameter may be a parameter determined by the terminal itself, or configured for the terminal, or received by the terminal. For example, the third parameter may be an UL parameter defined in the protocol, such as p0-NominalWithoutGrant, p0-NominalWithGrant, or pO-Nominalc.

In the foregoing implementation, determining the UL nominal power based on the third parameter can be implemented.

Optionally, the method further includes:

under a fifth condition, determining, by the terminal, the SL transmit power based on an UL nominal power of 0; or
under the fifth condition, determining, by the terminal, the SL transmit power based on an SL nominal power of 0; or
under the fifth condition, determining, by the terminal, the SL transmit power at least based on a preset SL reference power; or
under the fifth condition, determining, by the terminal, the SL transmit power at least based on the SL reference power; where

the fifth condition includes at least one of the following:

the terminal has not obtained the third parameter; and
the terminal has not obtained the UL nominal power.

In this implementation, in a case that the terminal has obtained or has not been configured with the third parameter or the UL nominal power, it can be implemented that the UL nominal power is considered to be equal to 0, or the SL transmit power is determined based on the preset SL reference power, or the SL transmit power is determined based on the SL reference power.

In an optional implementation, the determining, by the terminal, an SL transmit power based on the first power information includes:

under a sixth condition, determining, by the terminal, the SL transmit power based on the UL nominal power; or
under the sixth condition, determining, by the terminal, the SL transmit power based on the UL nominal power and the SL reference power; or

under the sixth condition, determining, by the terminal, the SL transmit power based on the UL nominal power and a preset SL reference power; where

the sixth condition includes at least one of the following:

the terminal has not obtained the first parameter indicating the SL reference power;
the terminal has not obtained a preset SL reference power;
the SL reference power is assumed to be 0; and
the terminal does not consider the SL reference power.

In this implementation, the SL transmit power can be determined based on the UL nominal power in a case that the terminal is not configured with the first parameter or the preset SL parameter P0, or that the SL reference power is assumed to be 0, or that the SL reference power is not considered.

In an optional implementation, in a case that the first power information includes the SL nominal power and the UL nominal power, the determining, by the terminal, an SL transmit power based on the first power information includes:

determining, by the terminal, the SL transmit power based on a smaller one of the SL nominal power and the UL nominal power;
determining, by the terminal, the SL transmit power based on a larger one of the SL nominal power and the UL nominal power; and
determining, by the terminal, a first SL transmit power based on the SL nominal power, determining a second SL transmit power based on the UL nominal power, and using a smaller or larger one of the first SL transmit power and the second SL transmit power as the SL transmit power.

In this implementation, it can be implemented that the SL transmit power can be determined based on a smaller/larger one of the SL nominal power and the UL nominal power, or a smaller/larger one of powers derived based on the two respectively can be used as the SL transmit power, thereby improving the flexibility of the SL transmit power. For example, if the UL nominal power is greater than the SL nominal power, the transmit power is determined based on the SL nominal power. For example, power 1 is derived based on the UL nominal power, power 2 is derived based on the SL nominal power, and power 1 is less than power 2; in this case, the SL transmit power is power 1.

In an optional implementation, in a case that the terminal is a first terminal, the terminal determines the SL transmit power based on the first power information; and/or

in a case that the terminal is not the first terminal, the terminal determines the SL transmit power based on other power information at least partially different from the first power information; where
the first terminal includes at least one of the following:
a connected-state terminal;
a terminal within a coverage of a cell;
a terminal with a serving cell;
a terminal that has obtained the first power information; and
a terminal that has obtained a power set configuration.

The terminal that has obtained the power set configuration may be a terminal that has obtained a reference power set (p0-Set) and a PUSCH reference power set (P0-PUSCH-AlphaSet).

The terminal may determine the SL transmit power based on other power information that is at least partially different from the first power information, or determine the SL transmit power based on other power information that is different from or partially the same as the first power information. For example, for other power information different from the first power information, the SL transmit power can be determined in an existing manner.

For example, a connected-state terminal or an in-coverage terminal or a terminal that has obtained the SL reference power determines the SL transmit power based on the SL reference power, and/or an idle-state (idle) terminal or an out-of-coverage terminal or a terminal that has not obtained the SL reference power determines the SL transmit power based on other power information or only based on the preset SL reference power.

For example, a connected-state terminal or an in-coverage terminal or a terminal that has obtained the SL nominal power determines the SL transmit power based on the SL nominal power, and/or an idle-state terminal or an out-of-coverage terminal or a terminal that has not obtained the SL nominal power determines the SL transmit power based on other power information, or determines the SL transmit power only based on the SL reference power or the preset SL reference power.

For example, a connected-state terminal or an in-coverage terminal or a terminal that has obtained the UL nominal power determines the SL transmit power based on the UL nominal power, and/or an idle-state terminal or an out-of-coverage terminal or a terminal that has not obtained the UL nominal power determines the SL transmit power based on other power information, or determines the SL transmit power only based on the SL reference power or the preset SL reference power.

In an optional implementation, in a case that the terminal is the first terminal, the SL reference power includes:

a reference power corresponding to a PUSCH; or
a reference power corresponding to a PUCCH; or
a reference power corresponding to an SRS; or
0.

Alternatively, in a case that the terminal is a first terminal, the SL reference power includes:

a reference power corresponding to a PRACH; or,
a reference power corresponding to a msgA; or,
a reference power corresponding to a PUSCH corresponding to a message 3 msg3; or
a reference power corresponding to a PUSCH corresponding to msgB; where
the first terminal includes at least one of the following:

a connected-state terminal;
a terminal within a coverage of a cell; and
a terminal that has obtained a power set configuration;
and/or
in a case that the terminal is a second terminal, the SL reference power includes:

a reference power corresponding to a PRACH; or
a reference power corresponding to a msgA; or
a reference power corresponding to a PUSCH corresponding to a message 3 (msg3); or
a reference power corresponding to a PUSCH corresponding to msgB.

Alternatively, in a case that the terminal is a second terminal, the SL reference power includes:

a reference power corresponding to a PUSCH; or
a reference power corresponding to a PUCCH; or
a reference power corresponding to an SRS; or
0.

The second terminal includes at least one of the following:

an idle-state terminal;
a terminal outside a coverage of a cell;
a terminal that has not identified a serving cell;
a terminal that has not obtained the first power information; and
a terminal that has not obtained a power set configuration.

In this implementation, it can be implemented that for a connected-state terminal or an in-coverage terminal or a terminal that has obtained a power set configuration (for example, p0-Set or PO-PUSCH-AlphaSet), the SL reference power is: a reference power corresponding to PUSCH, a reference power corresponding to PUCCH, a reference power corresponding to SRS, or 0.

Alternatively, for an idle terminal or an out-of-coverage terminal or a terminal that has not obtained a power set configuration (for example, p0-Set or P0-PUSCH-AlphaSet), the SL reference power is a reference power corresponding to PRACH/msgA, or a reference power corresponding to PUSCH corresponding to msg3/msgB, or 0.

Alternatively, the foregoing two cases are reversed.

In this implementation, the SL reference power can be determined flexibly.

In an optional implementation, in a case that the terminal is a first terminal, the UL nominal power includes:

a nominal power corresponding to a PUSCH; or
a nominal power corresponding to a PUCCH; or
0.

Alternatively, in a case that the terminal is a first terminal, the UL nominal power includes:

a nominal power corresponding to a PRACH; or
a nominal power corresponding to msgA; or
a nominal power corresponding to a PUSCH corresponding to a message 3 msg3; or
a nominal power corresponding to a PUSCH corresponding to msgB; where
the first terminal includes at least one of the following:

a connected-state terminal;
a terminal with a serving cell;
a terminal within a coverage of a cell; and
a terminal that has obtained a power set configuration;
and/or
in a case that the terminal is a second terminal, the UL nominal power includes:

a nominal power corresponding to a PRACH; or
a nominal power corresponding to msgA; or
a nominal power corresponding to a PUSCH corresponding to a message 3 msg3; or
a nominal power corresponding to a PUSCH corresponding to msgB.

Alternatively, in a case that the terminal is a second terminal, the UL nominal power includes:

a nominal power corresponding to a PUSCH; or
a nominal power corresponding to a PUCCH; or
a nominal power corresponding to an SRS; or
0.

The second terminal includes at least one of the following:

an idle-state terminal;
a terminal outside a coverage of a cell;
a terminal that has not identified a serving cell;
a terminal that has not obtained the first power; and
a terminal that has not obtained a power set configuration.

In this implementation, it can be implemented that for a connected-state terminal or an in-coverage terminal or a terminal that has obtained a power set configuration (for example, p0-Set, PO-PUSCH-AlphaSet), the SL nominal power is: a nominal power corresponding to PUSCH, a nominal power corresponding to PUCCH, or 0.

Alternatively, for an idle terminal or an out-of-coverage terminal or a terminal that has not obtained a power set configuration (for example, p0-Set or P0-PUSCH-AlphaSet), the SL nominal power is a nominal power corresponding to PRACH/msgA, or a nominal power corresponding to PUSCH corresponding to msg3/msgB, or 0.

Alternatively, the foregoing two cases are reversed.

In this implementation, the SL nominal power can be determined flexibly.

In an optional implementation, the SL reference power includes:

a product of a reference power indicated by a fourth parameter and Y1, where Y1 is a positive real number.

The fourth parameter may be a parameter defined in the protocol, such as a preset SL parameter P0, dl-P0-PSBCH-r16, sl-P0-PSSCH-PSCCH-r16, dl-P0-PSSCH-PSCCH-r16, or dl-P0-PSFCH-r16.

Y1 may be an integer, a decimal or a fraction, and can be specified by the protocol or configured by a base station.

In this implementation, values of parameters already defined in the protocol can be re-interpreted, without introducing new parameters or new values.

For example, a value of at least one of dl-P0-PSBCH-r16, sl-P0-PSSCH-PSCCH-r16, dl-P0-PSSCH-PSCCH-r16, and dl-P0-PSFCH-r16 is -16 to 15. In this way, when the parameter is indicated as X, a represented value is actually X*Y, for example, Y=12, and when X=-16, the actually represented value is -192. Preferably, Y=1,2,4,8,12,13,14,16. Alternatively, Y=1,2,3...,16, and for calculation of the SL transmit power, P0=X*Y.

In this implementation, because the SL reference power includes a product of the reference power indicated by the fourth parameter and Y1, there is no need to introduce additional parameters, thereby reducing complexity.

In an optional implementation, the determining, by the terminal, an SL transmit power based on the first power information includes:

determining, by the terminal, the SL transmit power based on a product of the first power information and Y2, where Y2 is a positive real number.

Y2 may be an integer, a decimal or a fraction, and can be specified by the protocol or configured by a base station.

The SL reference power in the first power information may be a preset SL reference power. For example, the SL reference power includes at least one of dl-PO-PSBCH-r16, sl-P0-PSSCH-PSCCH-r16, dl-P0-PSSCH-PSCCH-r16, and dl-PO-PSFCH-r16.

For example, the SL transmit power is determined based on at least one of the following:

$$P_{\text{PSSCH},D}(i) = Y \cdot P_{O,D} + 10 \log_{10}\left(2^{\mu} \cdot M_{RB}^{\text{PSSCH}}(i)\right) + \alpha_D \cdot PL_D$$

$$P_{\text{PSFCH,one}} = Y \cdot P_{O,\text{PSFCH}} + 10 \log_{10}(2^{\mu}) + \alpha_{\text{PSFCH}} \cdot PL \ [\text{dBm}]$$

$$P_{\text{S-SSB}}(i) = \min\left(P_{\text{CMAX}}, P_{O,\text{S-SSB}} \cdot Y + 10 \log_{10}\left(2^{\mu} \cdot M_{RB}^{\text{S-SSB}}\right) + \alpha_{\text{S-SSB}} \cdot PL\right)$$

where Y in the foregoing formula represents Y2.

The foregoing $P_{\text{PSSCH},D}(i)$ represents a PSSCH transmit power of the terminal at a transmission occasion i, and the foregoing $P_{O,D}$ is a value of the PSSCH and PSCCH reference power. $M_{RB}^{\text{PSSCH}}(i)$ is the number of resource blocks transmitted by PSSCH, i and $\mu$ are configured based on a subcarrier spacing (Subcarrier Spacing, SCS), $\alpha_D$ is a value of alpha of PSSCH and PSCCH, or $\alpha_D$=1, and $PL_D$ is a downlink pathloss.

$P_{\text{PSFCH,one}}$ is a PSFCH transmit power, $P_{O,\text{PSFCH}}$ is a PSFCH reference power, and $\alpha_{\text{PSFCH}}$ is a value of alpha of PSFCH, or $\alpha_{\text{PSFCH}}$=1, and $\alpha_{\text{PSFCH}}$ is a pathloss.

$P_{\text{S-SSB}}(i)$ represents an S-SSB transmit power of the terminal at a transmission occasion i, and $P_{O,\text{S-SSB}}$ is an S-SSB reference power, $M_{RB}^{\text{S-SSB}}$ is the number of resource blocks transmitted by an S-SSB, $\alpha_{\text{S-SSB}}$ is a value of alpha of the S-SSB, or $\alpha_{\text{PSFCH}}$=1, and $\alpha_{\text{PSFCH}}$ is a pathloss.

It should be noted that this embodiment of this application calculates the SL transmit power based on the following formula.

$$P_{\text{PSSCH},D}(i) = P_{O,D} + 10 \, log_{10}\left(2^{\mu} \cdot M_{RB}^{\text{PSSCH}}(i)\right) + \alpha_D \cdot PL_D$$

$$P_{\text{PSFCH,one}} = P_{O,PSFCH} + 10 \, log_{10}(2^{\mu}) + \alpha_{PSFCH} \cdot PL \ [\text{dBm}]$$

$$P_{\text{S-SSB}}(i) = min\left(P_{\text{CMAX}}, P_{O,\text{S-SSB}} + 10 \, log_{10}\left(2^{\mu} \cdot M_{RB}^{\text{S-SSB}}\right) + \alpha_{\text{S-SSB}} \cdot PL\right)$$

where $P_{O,D}$, $P_{O,PSFCH}$, and $P_{O,\text{S-SSB}}$ respectively represent an SL reference power corresponding to PSSCH and PSCCH, an SL reference power corresponding to PSFCH, and an SL reference power corresponding to S-SSB.

Alternatively, $P_{O,D}$, $P_{O,PSFCH}$, and $P_{O,\text{S-SSB}}$ respectively represent an SL nominal power corresponding to PSSCH and PSCCH, an SL reference power corresponding to PSFCH, and an SL nominal power corresponding to S-SSB.

In this embodiment of this application, the terminal determines or obtains the first power information, where the first power information includes at least one of the following: an SL reference power, an SL nominal power, and am UL nominal power. The terminal determines the SL transmit power based on the first power information. In this way, the SL transmit power can be determined based on at least one of the SL reference power, the SL nominal power, and the UL nominal power, thereby improving the SL transmission performance of the terminal.

The following describes the method provided in the embodiments of this application by using a plurality of embodiments as examples.

Embodiment 1:

Determining a PSSCH/RS transmit power is used as an example for describing this embodiment.

If a power is calculated based on a downlink pathloss, a PSSCH transmit power is obtained through deduction of a PSSCH and PSCCH reference power (dl-PO-PSSCH-PSCCH ($P_{O,D}$)) and a PSSCH and PSCCH nominal power (dl-P0-PSSCH-PSCCH-nominal ($P_{O\_nominal,D}$)); or if the power is calculated based on an SL pathloss, the PSSCH transmit power is obtained through deduction of a PSSCH and PSCCH reference power (sl-P0-PSSCH-PSCCH ($P_{O,SL}$)) and a PSSCH and PSCCH nominal power (sl-P0-PSSCH-PSCCH-nominal ($P_{O\_nominal,SL}$)), which is specifically as follows:

if dl-P0-PSSCH-PSCCH is provided, the following formula is used.

$$P_{\text{PSSCH},D}(i) = P_{O,D} + P_{O\_nominal,D} + 10\,log_{10}\left(2^{\mu} \cdot M_{\text{RB}}^{\text{PSSCH}}(i)\right) + \alpha_D \cdot PL_D$$

$$[\text{dBm}]$$

In other cases, the following formula is used:

$$P_{\text{PSSCH},D}(i) = min\left(P_{\text{CMAX}}, P_{\text{MAX,CBR}}\right)\ [\text{dBm}]$$

where $P_{\text{PSSCH},D}(i)$ represents a PSSCH transmit power of the terminal at a transmission occasion i;
$P_{O,D}$ represents dl-P0-PSSCH-PSCCH, and $P_{O\_nominal,D}$ represents dl-PO-PSSCH-PSCCH-nominal;
$\alpha_D$ is a value of alpha of PSSCH and PSCCH, or $\alpha_D = 1 PL_D$; and
$PL_D$ is a downlink pathloss;

If *sl-P0-PSSCH-PSCCH* is provided, the following formula is used.

$$P_{\text{PSSCH},SL}(i) = P_{O,SL} + P_{O\_nominal,SL} + 10\,log_{10}\left(2^{\mu} \cdot M_{\text{RB}}^{\text{PSSCH}}(i)\right) + \alpha_{SL} \cdot$$

$$PL_{SL}\ [\text{dBm}]$$

In other cases, the following formula is used:

$$P_{\text{PSSCH},SL}(i) = min\left(P_{\text{CMAX}}, P_{\text{PSSCH},D}(i)\right)\ [\text{dBm}]$$

where $P_{\text{PSSCH},SL}(i)$ is a PSSCH transmit power;
$P_{O,SL}$ is *sl-P0-PSSCH-PSCCH*;
$P_{O\_nominal,SL}$ is *sl-P0-PSSCH-PSCCH-nominal*;
$\alpha_{SL}$ is a value of SL alpha of PSSCH and PSCCH, or $\alpha_D = 1$;
$PL_{SL}$ is an SL pathloss; and

$M_{RB}^{PSSCH}(i)$ is the number of resource blocks transmitted by PSSCH, and i and $\mu$ are configured based on an SCS.

Embodiment 2:

Determining a PSFCH transmit power is used as an example for describing this embodiment.
A PSCCH transmit power is obtained through deduction based on a PSFCH reference power (dl-PO-PSFCH ($P_{O,PSFCH}$)) and a PSFCH nominal power (dl-PO-PSFCH -nominal ($P_{O\_nominal,PSFCH}$)) or $P_{\text{CMAX}}$.
If the PSFCH SL reference power (*dl-PO-PSFCH*) is provided, the following formula is used:

$$P_{\text{PSFCH,one}} = P_{O,PSFCH} + P_{O\_nominal,PSFCH} + 10log_{10}(2^{\mu}) + \alpha_{PSFCH} \cdot PL\ [\text{dBm}]$$

where $P_{\text{PSFCH,one}}$ is a PSFCH transmit power, $P_{O,PSFCH}$ is *dl-PO-PSFCH,* $P_{O\_nominal,PSFCH}$ is a PSFCH nominal power (*dl-P0-PSFCH-nominal*), $\alpha_{PSFCH}$ is a value of alpha of PSFCH, or $\alpha_{PSFCH} = 1$, and *PL* is a pathloss.

Embodiment 3:

Determining an S-SSB transmit power is used as an example for describing this embodiment.
An S-SSB power is obtained through deduction based on a PSBCH reference power (dl-PO-PSBCH ($P_{O,S\text{-}SSB}$)) and a PSBCH nominal power (dl-PO-PSBCH-nominal ($P_{O\_nominal,S\text{-}SSB}$)) or a maximum transmit power ($P_{\text{CMAX}}$)), which

is specifically as follows:

$$P_{\text{S-SSB}}(i) = min\left(P_{\text{CMAX}}, P_{\text{O,S-SSB}} + \text{P}_{\text{O\_nominal,S-SSB}} + 10\,log_{10}\left(2^{\mu} \cdot M_{\text{RB}}^{\text{S-SSB}}\right) + \alpha_{\text{S-SSB}} \cdot PL\right)\ [\text{dBm}]$$

where $P_{\text{S-SSB}}(i)$ is a transmit power of an S-SS/PSBCH transmission occasion in a slot i on an active SL BWP of a carrier *f*;
$P_{\text{O,S-SSB}}$ is dl-PO-PSBCH, and $\text{P}_{\text{O\_nominal,S-SSB}}$ is dl-P0-PSBCH-nominal;
or

$$P_{\text{S-SSB}}(i) = P_{\text{CMAX}}$$

$\alpha_{\text{S-SSB}}$ is a value of alpha of S-SSB, or $\alpha_{\text{S-SSB}}$=1; and
*PL* is a pathloss.

Embodiment 4:

Determining a PSSCH/RS transmit power is used as an example for describing this embodiment.
If a power is calculated based on a downlink pathloss, a PSSCH power is obtained through deduction of dl-P0-PSSCH-PSCCH ($P_{\text{O,D}}$) and dl-P0-PSSCH-PSCCH-nominal ($\text{P}_{\text{O\_nominal,D}}$); or if the power is calculated based on an SL pathloss, the PSSCH power is obtained through deduction of sl-P0-PSSCH-PSCCH ($P_{\text{O,SL}}$) and sl-P0-PSSCH-PSCCH-nominal ($\text{P}_{\text{O\_nominal,SL}}$), which is specifically as follows:
If *dl-P0-PSSCH-PSCCH* is provided, the following formula is used:

$$P_{\text{PSSCH},D}(i) = P_{\text{O}} + 10\,log_{10}\left(2^{\mu} \cdot M_{\text{RB}}^{\text{PSSCH}}(i)\right) + \alpha_D \cdot PL_D\ [\text{dBm}]$$

In other cases, the following formula is used:

$$P_{\text{PSSCH},D}(i) = min\left(P_{\text{CMAX}}, P_{\text{MAX,CBR}}\right)\ [\text{dBm}]$$

where $P_{\text{PSSCH},D}(i)$ represents a PSSCH transmit power of the terminal at a transmission occasion i; and
$P_{\text{O}}$ is a sum of $P_{\text{O,D}}$ and $\text{P}_{\text{O\_nominal,D}}$.

If dl-P0-PSSCH-PSCCH is provided, $P_{\text{O,D}}$ is dl-P0-PSSCH-PSCCH; otherwise, $P_{\text{O,D}}$=0.
If dl-P0-PSSCH-PSCCH-nominal is provided, $\text{P}_{\text{O\_nominal,D}}$ is dl-PO-PSSCH-PSCCH-nominal; otherwise, $\text{P}_{\text{O\_nominal,D}}$ = 0.
$\alpha_D$ is a value of alpha of PSSCH and PSCCH, or $\alpha_D$=1, and $PL_D$ is a downlink pathloss.
If *sl-P0-PSSCH-PSCCH* is provided, the following formula is used.

$$P_{\text{PSSCH},SL}(i) = P_{\text{O}} + 10\,log_{10}\left(2^{\mu} \cdot M_{\text{RB}}^{\text{PSSCH}}(i)\right) + \alpha_{SL} \cdot PL_{SL}\ [\text{dBm}]$$

In other cases, the following formula is used:

$$P_{\text{PSSCH},SL}(i) = min\left(P_{\text{CMAX}}, P_{\text{PSSCH},D}(i)\right)\ [\text{dBm}]$$

where $\text{P}_{\text{PSSCH,SL}}(i)$ is a PSSCH transmit power;
$\text{P}_{\text{O,SL}}$ is sl-P0-PSSCH-PSCCH; and
$\text{P}_{\text{O}}$ is a sum of $\text{P}_{\text{O,SL}}$ and $\text{P}_{\text{O\_nominal,SL}}$.

If sl-P0-PSSCH-PSCCH is provided, $\text{P}_{\text{O,SL}}$ is sl-P0-PSSCH-PSCCH; otherwise, $\text{P}_{\text{O,SL}}$=0.

If sl-P0-PSSCH-PSCCH-nominal is provided, $P_{O\_nominal,SL}$ is sl-PO-PSSCH-PSCCH-nominal; otherwise, $P_{O\_nominal,SL} = 0$.

$\alpha_D$ is a value of SL alpha of PSSCH and PSCCH, or $\alpha_D=1$, and $PL_D$ is a downlink pathloss.

Embodiment 5:

Determining a PSFCH transmit power is used as an example for describing this embodiment.

A PSFCH transmit power is obtained through deduction based on a PSFCH reference power (dl-PO-PSFCH ($P_{O,PSFCH}$)) and a PSFCH nominal power (dl-PO-PSFCH -nominal ($P_{O\_nominal,PSFCH}$)) or $P_{CMAX}$.

If the PSFCH reference power (dl-P0-PSFCH) is provided, the following formula is used:

$$P_{\text{PSFCH,one}} = P_O + 10\,log_{10}(2^\mu) + \alpha_{PSFCH} \cdot PL \ \ [\text{dBm}]$$

where $P_{\text{PSFCH,one}}$ is a PSFCH transmit power, and
$P_O$ is a sum of $P_{O\_nominal,PSFCH}$ and $P_{O,PSFCH}$;

If dl-PO-PSFCH is provided, $P_{O,PSFCH}$ is dl-PO-PSFCH; otherwise, $P_{O,PSFCH}=0$.

If dl-P0-PSFCH-nominal is provided, $P_{O\_nominal,PSFCH}$ is dl-P0-PSFCH-nominal; otherwise, $P_{O\_nominal,PSFCH}=0$. $\alpha_{PSFCH}$ is a value of alpha of PSFCH, or $\alpha_{PSFCH}=1$, and $PL_D$ is a downlink pathloss.

Embodiment 6

Determining an S-SSB transmit power is used as an example for describing this embodiment.

An S-SSB power is obtained through deduction based on a PSBCH reference power (dl-PO-PSBCH ($P_{O,S-SSB}$)) and a PSBCH nominal power (dl-PO-PSBCH-nominal ($P_{O\_nominal,S-SSB}$)) or $P_{CMAX}$, which is specifically as follows:

$$P_{\text{S-SSB}}(i) = min\big(P_{\text{CMAX}}, P_O + 10\,log_{10}\big(2^\mu \cdot M_{\text{RB}}^{\text{S-SSB}}\big) + \alpha_{\text{S-SSB}} \cdot PL\big)$$

$$[\text{dBm}]$$

where $P_{\text{S-SSB}}(i)$ is a transmit power of an S-SS/PSBCH transmission occasion in a slot i on an active SL BWP of a carrier $f$; and
$P_O$ is a sum of $P_{O,S-SSB}$ and $P_{O\_nominal,S-SSB}$.

If dl-PO-PSBCH is provided, $P_{O,S-SSB}$ is dl-PO-PSBCH; otherwise, $P_{O,S-SSB}=0$.

If dl-P0-PSBCH-nominal is provided, $P_{O\_nominal,S-SSB}$ is dl-P0-PSBCH-nominal; otherwise, $P_{O\_nominal,S-SSB}=0$.

If neither dl-PO-PSBCH nor dl-P0-PSBCH-nominal is provided, $P_{\text{S-SSB}}(i) = P_{CMAX}$.

$\alpha_{\text{S-SSB}}$ is a value of alpha of S-SSB, or $\alpha_{\text{S-SSB}}=1$; and
$PL$ is a pathloss.

Embodiment 7

In this implementation, using UL being a PUSCH as an example, if the UL is a PUCCH or other UL channels, a parameter or letter is replaced by a parameter corresponding to a corresponding channel, which is specifically as follows:

For a PSSCH/RS transmit power:
the PSSCH power is obtained through deduction based on the UL nominal power ($P_{O\_nominal,UL}$).

If dl-P0-PSSCH-PSCCH is provided, the following formula is used.

$$P_{\text{PSSCH},D}(i) = P_{O,D} + P_{O\_nominal,UL} + 10\,log_{10}\left(2^\mu \cdot M_{\text{RB}}^{\text{PSSCH}}(i)\right) + \alpha_D \cdot$$

$$PL_D \ \ [\text{dBm}]$$

In other cases, the following formula is used:

$$P_{\text{PSSCH},D}(i) = min\left(P_{\text{CMAX}}, P_{\text{MAX,CBR}}\right) \ [\text{dBm}]$$

where $P_{\text{PSSCH},D}(i)$ represents a PSSCH transmit power of the terminal at a transmission occasion i;

$P_{O,D}$ is *dl-P0-PSSCH-PSCCH*;

$P_{O\_nominal,UL}$ is an UL nominal power ( $P_{O\_NOMINAL\_PUSCH,f,c}(j)$ ) corresponding to a corresponding PUSCH, and further, may be an UL nominal power $P_{O\_NOMINAL\_PUSCH,f,c}(j)$ corresponding to the last PUSCH or a previous PUSCH in a cell in which the SL BWP is located, further, the PUSCH may be a PUSCH scheduled by DCI format 0-0; or $P_{O\_nominal,UL}$ is an UL nominal power corresponding to p0-NominalWithGrant; and

$\alpha_D$ is a value of alpha of PSSCH and PSCCH, or $\alpha_D$=1, and $PL_D$ is a downlink pathloss.

If *sl-P0-PSSCH-PSCCH* is provided, the following formula is used.

$$P_{\text{PSSCH},SL}(i) = P_{O,SL} + P_{O\_nominal,UL} + 10\, log_{10}\left(2^{\mu} \cdot M_{\text{RB}}^{\text{PSSCH}}(i)\right) + \alpha_{SL} \cdot$$

$$PL_{SL} \ [\text{dBm}]$$

In other cases, the following formula is used:

$$P_{\text{PSSCH},SL}(i) = min\left(P_{\text{CMAX}}, P_{\text{PSSCH},D}(i)\right) \ [\text{dBm}]$$

where $P_{\text{PSSCH},SL}(i)$ is a PSSCH transmit power;

$P_{O,SL}$ is *sl-P0-PSSCH-PSCCH*; and

$P_{O\_nominal,SL}$ is $P_{O\_NOMINAL\_PUSCH,f,c}(j)$

For a PSFCH transmit power:

a PSCCH power is obtained through deduction based on a PSFCH reference power (dl-P0-PSFCH ($P_{O,PSFCH}$)) and an UL nominal power ($P_{O\_nominal,PSFCH}$), or $P_{\text{CMAX}}$.

If the PSFCH reference power (*dl-P0-PSFCH*) is provided, the following formula is used.

$$P_{\text{PSFCH,one}} = P_{O,PSFCH} + P_{O\_nominal,PSFCH} + 10log_{10}(2^{\mu}) + \alpha_{PSFCH} \cdot PL \ [\text{dBm}]$$

where $P_{\text{PSFCH,one}}$ is a PSFCH transmit power;

$P_{O,PSFCH}$ is *dl-P0-PSFCH*;

$P_{O\_nominal,PSFCH}$ is an UL nominal power $P_{O\_NOMINAL\_PUSCH,f,c}(j)$ corresponding to a PUSCH, and further, may be an UL nominal power $P_{O\_NOMINAL\_PUSCH,f,c}(j)$ corresponding to the last PUSCH or a previous PUSCH in a cell in which the SL BWP is located; further, the PUSCH may be a PUSCH scheduled by DCI format 0-0; or $P_{O\_nominal,UL}$ is an UL nominal power corresponding to p0-NominalWithGrant; and

$\alpha_{PSFCH}$ is a value of alpha of PSFCH, or $\alpha_{PSFCH}$ =1, and $PL_D$ is a downlink pathloss.

For an S-SSB transmit power:

an S-SSB power is a PSBCH reference power (dl-P0-PSBCH ($P_{O,S-SSB}$)) and an UL nominal power ($P_{O\_nominal,S-SSB}$), or $P_{\text{CMAX}}$.

$$P_{\text{S-SSB}}(i) = min\left(P_{\text{CMAX}}, P_{O,S-SSB} + P_{O\_nominal,S-SSB} + 10\, log_{10}\left(2^{\mu} \cdot\right.\right.$$

$$\left.\left. M_{\text{RB}}^{\text{S-SSB}}\right) + \alpha_{S-SSB} \cdot PL\right) \ [\text{dBm}]$$

where $P_{\text{S-SSB}}(i)$ is a transmit power of an S-SSB/PSBCH transmission occasion in a slot i on an active SL BWP of a carrier *f*.

If *dl-P0-PSBCH* is provided, $P_{O,S-SSB}$ is *dl-P0-PSBCH*. $P_{O\_nominal,S-SSB}$ is an UL nominal power ($P_{O\_NOMI-}$

$_{NAL\_PUSCH,f,c}(j)$) corresponding to a corresponding PUSCH, and further, may be an UL nominal power $P_{O\_NOMINAL\_PUSCH,f,c}(j)$ corresponding to the last PUSCH or a previous PUSCH in a cell in which the SL BWP is located, further, the PUSCH may be a PUSCH scheduled by DCI format 0-0; or $P_{O\_nominal,UL}$ is an UL nominal power corresponding to pO-Nominal With Grant.

Otherwise, $P_{S\text{-}SSB}(i) = P_{CMAX}$.

$\alpha_{S\text{-}SSB}$ is a value of alpha of S-SSB, or $\alpha_{S\text{-}SSB}=1$; and
$PL$ is a pathloss.

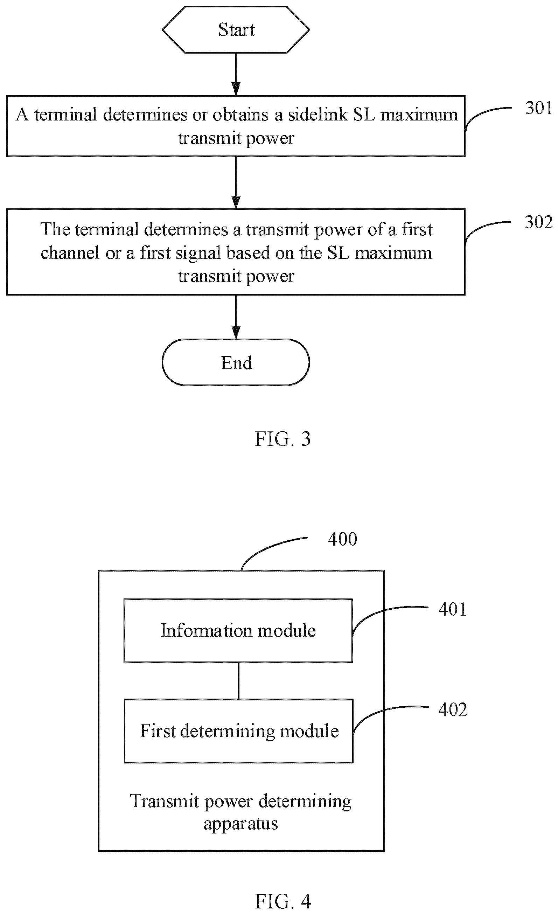

Refer to FIG. 3, FIG. 3 is a flowchart of a transmit power determining method according to this application. As shown in FIG. 3, the method includes the following steps.

Step 301: A terminal determines or obtains an SL maximum transmit power.

The determining or obtaining the SL maximum transmit power by the terminal may be that the terminal determine or the SL maximum transmit power by itself, or that the terminal determines the SL maximum transmit power based on a parameter, or that the terminal receives the SL maximum transmit power sent by other devices.

The SL maximum transmit power includes at least one of the following:

an SL maximum transmission power (sl-MaxTransPower) corresponding to the first resource pool;
an SL maximum transmit power (sl-MaxTxPower) corresponding to the first resource pool;
a maximum Uu interface transmit power (p-max); and
a maximum transmit power of a first channel or a first signal.

The SL maximum transmission power corresponding to the first resource pool may be a maximum value indicating a sidelink transmission power of the terminal on the resource pool.

The SL maximum transmit power corresponding to the first resource pool may be a conditional parameter depending on a channel busy ratio (Channel Busy Ratio, CBR), and the maximum transmit power is associated with a priority of PSSCH transmission and a CBR range.

The maximum Uu interface transmit power may be an uplink power limit.

The SL maximum transmission power corresponding to the first resource pool, the SL maximum transmit power corresponding to the first resource pool, and the maximum Uu interface transmit power may be configured or pre-configured for the terminal.

The first resource pool is a sending resource pool. In addition, other resource pools or all resource pools involved in this embodiment of this application are sending resource pools.

The maximum transmit power of the first channel or the first signal may be a new parameter introduced into this embodiment of this application, and is specially used to indicate the maximum transmit power of the first channel or the first signal. For example, for the S-SSB, the maximum transmit power is specially used to indicate the maximum transmit power (sl-S-SSB-MaxTxpower) of the S-SSB.

In addition, the maximum transmit power of the first channel or the first signal may have no correspondence with the resource pool.

The first channel or the first signal includes at least one of S-PSS, S-SSS, and PSBCH.

Step 302: The terminal determines a transmit power of the first channel or the first signal based on the SL maximum transmit power.

Determining the transmit power of the first channel or the first signal based on the SL maximum transmit power may be obtaining the transmit power of the first channel or the first signal through deduction based on the SL maximum transmit power.

In this embodiment, a transmit power of at least one of S-PSS, S-SSS, and PSBCH can be determined based on the SL maximum transmit power through the foregoing steps, thereby improving the SL transmission performance of the terminal.

In addition, in this implementation, the transmit power of at least one of S-PSS, S-SSS, and PSBCH is determined based on the SL maximum transmit power. This can avoid the problem that when the terminal can have multiple resource pools, and S-PSS, S-SSS, and PSBCH are outside the resource pools, it is unclear how to determine the maximum transmit power of S-PSS, S-SSS, and PSBCH, resulting in errors.

In an optional implementation, the determining, by the terminal, a transmit power of a first channel or a first signal based on the SL maximum transmit power includes:

determining, by the terminal, the transmit power of the first channel or the first signal based on the SL maximum transmit power and a first power; where
the first power is a second transmit power of the first channel or the first signal obtained through calculation by the terminal based on a formula.

The first power may be a transmit power of the first channel or the first signal calculated based on a formula defined in the protocol. For example, the transmit power of the first channel or the first signal is calculated based on the following formula:

$$P_{O,S-SSB} + 10\,log_{10}\big(2^{\mu} \cdot M_{RB}^{S-SSB}\big) + \alpha_{S-SSB} \cdot PL,$$

or

$$P_{O,S-SSB} + P_{O,nominal,S-SSB} + 10\,log_{10}\big(2^{\mu} \cdot M_{RB}^{S-SSB}\big) + \alpha_{S-SSB} \cdot PL$$

where $P_{O,S-SSB}$ is a reference power of the first channel or the first signal, and $P_{O\_nominal,S-SSB}$ is a nominal power of the first channel or the first signal. For other parameters, refer to the corresponding descriptions of the embodiment shown in FIG. 2, which will not be repeated here.

Optionally, the determining, by the terminal, the transmit power of the first channel or the first signal based on the SL maximum transmit power and a first power includes:

determining, by the terminal, a smaller one of the SL maximum transmit power and the first power as the transmit power of the first channel or the first signal.

In this implementation, the SL maximum transmit power can be compared with the first power to determine the transmit power of the first channel or the first signal, which can improve the flexibility of the transmit power of the first channel or the first signal. In addition, determining a smaller one as the transmit power of the first channel or the first signal can reduce the interference.

It should be noted that in this embodiment of this application, it is not limited to determine a smaller one of the SL maximum transmit power and the first power as the transmit power of the first channel or the first signal. For example, in some implementations, a larger one of the SL maximum transmit power and the first power can be determined as the transmit power of the first channel or the first signal.

In an optional implementation, the first resource pool includes at least one of the following:

a resource pool corresponding to a largest resource pool identifier in resource pool identifiers obtained by the terminal;
a resource pool corresponding to a smallest resource pool identifier in the resource pool identifiers obtained by the terminal;
a resource pool corresponding to a specific resource pool identifier in the resource pool identifiers obtained by the terminal;
a resource pool whose frequency domain resources overlap with a frequency domain resource of the first channel or the first signal;
a neaerest resource pool;
a previous or last resource pool for a time domain resource of the first channel or the first signal;
a next or 1st resource pool after the time domain resource of the first channel or the first signal;
a resource pool with a largest or smallest SL transmit power in resource pools corresponding to the terminal;
a resource pool with a largest channel busy rate CBR value in the resource pools corresponding to the terminal;
a resource pool with a smallest CBR value in the resource pools corresponding to the terminal;
a resource pool corresponding to a specific CBR value in the resource pools corresponding to the terminal;
a resource pool with a largest channel occupancy ratio (Channel occupancy, CR) value in the resource pools corresponding to the terminal;
a resource pool with a smallest CR value in the resource pools corresponding to the terminal;
a resource pool corresponding to a specific CR value in the resource pools corresponding to the terminal;
a resource pool with an SL maximum transmit power being greater than or equal to a first power in the resource pools corresponding to the terminal;
a resource pool with an SL maximum transmit power being less than or equal to the first power in the resource pools corresponding to the terminal; and
a resource pool with an SL maximum transmit power being closest to the first power in the resource pools corresponding to the terminal.

The closest resource pool may be a resource pool closest to the time domain resource of the first channel or the first signal.

The time domain resource of the first channel or the first signal may include at least one of the following: a time domain resource for transmitting the first channel or the first signal, and a time domain resource for receiving the first channel or the first signal.

In this implementation, it can be implemented that the SL maximum transmit power is sl-MaxTransPower/sl-MaxTxPower/p-max corresponding to a specific resource pool. Specifically, it is the following resource pool:

a resource pool identifier corresponding to a largest/smallest/specific value, where, for example, four resource pools 0/1/2/3 are configured, and each resource pool has sl-MaxTransPower; then the SL maximum transmit power is sl-MaxTransPower of resource pool 0 with the smallest resource pool identifier;

a resource pool whose frequency domain resources at least partially overlap with a frequency domain resource of the first channel or the first signal;

a closest or previous resource pool for the time domain resource of the first channel or the first signal;

a resource pool with a largest or smallest sl-MaxTransPower/sl-MaxTxPower/p-max;

a resource pool corresponding to a largest/smallest/specific CBR value in the corresponding CBR, for example, the CBRs of the four resource pools are CBR1/2/3/4 respectively, where CBR2 is the largest; in this case, the resource pool is a resource pool corresponding to CBR2;

a resource pool corresponding to a largest/smallest/specific CR value in the corresponding CR, for example, the CRs of the four resource pools are CR1/2/3/4 respectively, where CR2 is the largest; in this case, the resource pool is a resource pool corresponding to CR2;

a resource pool with sl-MaxTransPower/sl-MaxTxPower/p-max greater than or equal to the first power;

a resource pool with sl-MaxTransPower/sl-MaxTxPower/p-max less than or equal to the first power; and

a resource pool in which sl-MaxTransPower/sl-MaxTxPower/p-max is closest to the first power in all sl-MaxTransPower/sl-MaxTxPower/p-max configured/pre-configured for the terminal, for example, four resource pools 1/2/3/4 are configured, and each resource pool has sl-MaxTransPower; then the SL maximum transmit power is sl-MaxTransPower greater than the first power and closest to the first power.

In this implementation, the SL maximum transmit power can be flexibly determined through the foregoing plurality of resource pools.

In an optional implementation, the maximum Uu interface transmit power includes at least one of the following:

a maximum Uu interface transmit power corresponding to a second cell group CG;

a maximum Uu interface transmit power corresponding to a second carrier;

a maximum Uu interface transmit power corresponding to a second cell;

a maximum Uu interface transmit power corresponding to a latest UL BWP or UL transmission;

a maximum Uu interface transmit power corresponding to a previous or last UL BWP or UL transmission for a time domain resource of the first channel or the first signal;

a maximum Uu interface transmit power corresponding to a next or 1st UL BWP or UL transmission after the time domain resource of the first channel or the first signal;

a maximum Uu interface transmit power greater than or equal to the first power; and

a maximum Uu interface transmit power less than or equal to the first power; and

a maximum Uu interface transmit power closest to the first power.

The maximum Uu interface transmit power corresponding to the closest UL BWP or UL transmission may be the maximum Uu interface transmit power corresponding to the closest UL BWP or UL transmission on the time domain resource of the first channel or the first signal.

Here, for the time domain resource of the first channel or the first signal, reference may be made to the description of the foregoing implementation. In this way, it is implemented that the maximum Uu interface transmit power is the maximum Uu interface transmit power transmitted as follows:

a closest or previous UL BWP or UL transmission before the time domain resource of the first channel or the first signal;

a closest or previous UL BWP or UL transmission before the time domain resource for transmitting the first channel or the first signal;

a closest or previous UL BWP or UL transmission after the time domain resource of the first channel or the first signal; and

a closest or previous UL BWP or UL transmission after the time domain resource for transmitting the first channel or the first signal.

Optionally, the second CG includes at least one of the following:

a master cell group MCG;

a CG in which SL DCI is located, or a CG configured with SL DCI;

a CG in which an SL bandwidth part BWP is located, or a CG configured with an SL BWP, or a CG associated with an SL BWP; and

a CG in which an UL BWP corresponding to an SL BWP is located, or a CG configured with an UL BWP corresponding to an SL BWP, or a CG of an UL BWP which is associated with an SL BWP;

and/or

the second carrier includes at least one of the following:

a primary carrier;

a carrier on which SL DCI is located, or a carrier configured with SL DCI;

a carrier on which an SL bandwidth part BWP is located, or a carrier configured with an SL BWP, or a carrier associated with an SL BWP;

a carrier on which an UL BWP corresponding to an SL BWP is located, or a carrier configured with an UL BWP corresponding to an SL BWP, or a carrier of an UL BWP which is associated with an SL BWP;

a carrier corresponding to a largest carrier identifier in carrier identifiers obtained by the terminal;

a carrier corresponding to a smallest carrier identifier in the carrier identifiers obtained by the terminal; and

a carrier corresponding to a specific carrier identifier in the carrier identifiers obtained by the terminal;

and/or

the second cell includes at least one of the following:

a primary cell;

a cell in which SL DCI is located, or a cell configured with SL DCI;

a cell in which an SL bandwidth part BWP is located, or a cell configured with an SL BWP, or a cell associated with an SL BWP;

a cell in which an UL BWP corresponding to an SL BWP is located, or a cell configured with an UL BWP corresponding to an SL BWP, or a cell associated with an UL BWP of an SL BWP;

a cell in which an UL BWP corresponding to an SL BWP is located, or a cell configured with an UL BWP corresponding to an SL BWP, or a cell associated with an UL BWP of an SL BWP;

a cell corresponding to a largest cell identifier in cell identifiers obtained by the terminal;

a cell corresponding to a smallest cell identifier in the cell identifiers obtained by the terminal; and

a cell corresponding to a specific cell identifier in the cell identifiers obtained by the terminal.

In this implementation, it can be implemented that the maximum Uu interface transmit power is p-max corresponding to a specific CG/cell/carrier configured/pre-configured for the terminal, and the specific CG/cell/carrier is a CG/cell/carrier that meets at least one of the following:

a MCG/primary cell/primary carrier/SUL;

a CG/cell/ carrier on which SL DCI is located, or expressed as a CG/cell/carrier configured with SL DCI; where the SL DCI is DCI for scheduling or indicating or activating or deactivating an SL resource, such as DCI format 3-0 or DCI format 3-1;

a CG/cell/ carrier on which SL BWP is located, or a CG/cell/carrier configured with SL BWP, or a CG/cell/carrier associated with SL BWP;

a CG/cell/ carrier on which an UL BWP corresponding to an SL BWP is located, or a CG/cell/carrier configured with an UL BWP corresponding to an SL BWP, or a CG/cell/carrier of an UL BWP which is associated with an SL BWP; where the UL BWP corresponding to the SL BWP can also be interpreted as an UL BWP that at least partially overlaps with the SL BWP; or

a CG/cell/carrier identifier corresponding to a maximum/minimum/specific value, where, for example, four Uu cells 0/1/2/3 are configured; and then the SL maximum transmit power is p-max of cell 0 with a smallest cell identifier.

Alternatively, the maximum Uu interface transmit power is P-max corresponding to a closest or previous UL BWP or UL transmission of the time domain resource of the first channel or the first signal.

Alternatively, the maximum Uu interface transmit power is a maximum Uu interface transmit power greater than or equal to the first power.

Alternatively, the maximum Uu interface transmit power is a maximum Uu interface transmit power less than or equal to the first power.

Alternatively, the maximum Uu interface transmit power is a maximum Uu interface transmit power closest to the first power in all maximum Uu interface transmit powers configured/pre-configured for the terminal, for example, there are two p-maxs, and the SL maximum transmit power is p-max that is greater than and closest to the first power.

In an optional implementation, the SL maximum transmit power includes at least one of the following:

a largest or smallest SL maximum transmit power in SL maximum transmit powers corresponding to the terminal;

an SL maximum transmit power with a largest identifier in the SL maximum transmit powers corresponding to the terminal;

an SL maximum transmit power with a smallest identifier in the SL maximum transmit powers corresponding to the terminal;

an SL maximum transmit power with a specific identifier in the SL maximum transmit powers corresponding to the terminal;

an SL maximum transmit power greater than or equal to a first power in the SL maximum transmit powers corresponding to the terminal;

an SL maximum transmit power less than or equal to the first power in the SL maximum transmit powers corresponding to the terminal;

an SL maximum transmit power closest to the first power in the SL maximum transmit powers corresponding to the terminal;

an SL maximum transmit power corresponding to a second channel or a second signal;

an SL maximum transmit power corresponding to a first priority;

an SL maximum transmit power corresponding to a first CBR value;

an SL maximum transmit power corresponding to a first CBR range;

an SL maximum transmit power corresponding to a first CR value; and

an SL maximum transmit power corresponding to a default configuration.

The second channel may include at least one of the following:

a channel with a highest priority;

a channel with a lowest priority;

a channel with a specific priority;

a PSCCH;

a PSSCH;

a PSFCH;

a random access channel (Random Access Channel, RACH); and

a PUSCH.

The second signal may include at least one of the following:
uplink configured grant (UL Configured Grant, UL CG), msg3, and msg3 retransmission.

The PUSCH may include at least one of the following:

a PUSCH corresponding to a configured grant;

a PUSCH configured with no reference power; and

a DCI-scheduled PUSCH not including a sounding reference signal resource indicator SRI.

The first CBR range may correspond to one transmission parameter configuration, or the first CBR range corresponds to one SL maximum transmit power; or

the first CBR range may correspond to a plurality of SL maximum transmit powers, and the SL maximum transmit power is one of the plurality of SL maximum transmit powers. For example, the largest/smallest one is selected, or one is randomly selected.

In this implementation, the SL maximum transmit power can be flexibly determined.

In addition, in this embodiment of this application, other or all CRB ranges other than the first CBR range may correspond to one transmission parameter configuration or one SL maximum transmit power; or, other or all CRB ranges other than the first CBR range may be multiple SL maximum transmit powers.

For example, the sl-MaxTransPower/sl-MaxTxPower/p-max is at least one of the following sl-MaxTransPower/sl-MaxTxPower/p-max configured/pre-configured for the terminal:

a maximum/minimum sl-MaxTransPower/sl-MaxTxPower/p-max, where, for example, there are four resource pools 1/2/3/4, and each resource pool has sl-MaxTransPower, so the SL maximum transmit power is the largest or smallest in the four sl-MaxTransPowers; for another example, if one resource pool is configured with multiple sl-MaxTxPowers (for example, corresponding to different CBR ranges), the SL maximum transmit power is the largest or smallest sl-MaxTxPower in the multiple sl-MaxTxPowers;

sl-MaxTransPower/sl-MaxTxPower/p-max corresponding to a largest/smallest/specific identifier, where, for example, if four sl-MaxTransPowers are configured, corresponding to the identifier 0/1/2/3 respectively, then the SL maximum transmit power is sl-MaxTransPower with the largest or smallest identifier in the four sl-MaxTransPowers.

sl-MaxTransPower/sl-MaxTxPower/p-max greater than or equal to the first power;

sl-MaxTransPower/sl-MaxTxPower/p-max less than or equal to the first power;

sl-MaxTransPower/sl-MaxTxPower/p-max closest to the first power in all sl-MaxTransPower/sl-MaxTxPower/p-max configured/pre-configured for the terminal;

sl-MaxTransPower/sl-MaxTxPower/p-max corresponding to a specific channel/signal, where for example, sl-MaxTransPower/sl-MaxTxPower corresponding to a highest/lowest/specific-priority PSCCH/PSFCH/S-SSB transmission; or for another example, sl-MaxTransPower/sl-MaxTxPower corresponding to PSCCH/PSSCH; or for still another example, sl-MaxTransPower/sl-MaxTxPower corresponding to PSFCH, for example: p-max corresponding to RACH, UL CG, msg3, msg3 retransmission, or uplink transmission in a case that j=0/1/2;

sl-MaxTransPower/sl-MaxTxPower corresponding to a highest/lowest/specific priority;

sl-MaxTransPower/sl-MaxTxPower corresponding to a highest/lowest/specific CBR value or CBR range, where the specific CBR value or specific CBR range may be a default CBR (default CBR);

sl-MaxTransPower/sl-MaxTxPower corresponding to a highest/lowest/specific CR value, where the specific CR value or specific CR may be CR corresponding to a default CBR or sl-DefaultTxConfig, or sl-DefaultTxConfigIndex; or

sl-MaxTransPower/sl-MaxTxPower corresponding to a default configuration, for example, sl-MaxTransPower/sl-MaxTxPower corresponding to sl-DefaultTxConfig or sl-DefaultTxConfigIndex.

In this embodiment, a transmit power of at least one of S-PSS, S-SSS, and PSBCH can be determined based on the SL maximum transmit power through the foregoing steps, thereby improving the SL transmission performance of the terminal.

Refer to FIG. 4. FIG. 4 is a structural diagram of a transmit power determining apparatus according to an embodiment of this application. As shown in FIG. 4, the transmit power determining apparatus 400 includes:

an information module 401, configured to determine or obtain first power information, where the first power information includes at least one of the following: a sidelink SL reference power, an SL nominal power, and an uplink UL nominal power; and

a first determining module 402, configured to determine an SL transmit power based on the first power information.

Optionally, a value range of the SL reference power is [-202,24].

Optionally, the SL reference power includes:

an SL reference power indicated by a first parameter; or

an SL reference power that is determined based on at least one of a reference power corresponding to UL and a nominal power corresponding to UL.

Optionally, the first parameter is used for at least one of the following:

indicating an SL reference power for a case that the SL transmit power is determined based on a downlink DL pathloss;

indicating an SL reference power for a case that the SL transmit power is determined based on an SL pathloss;

indicating an SL reference power of a physical sidelink shared channel PSSCH;

indicating an SL reference power of a physical sidelink control channel PSCCH;

indicating an SL reference power of a physical sidelink feedback channel PSFCH;

indicating an SL reference power of an S-PSS;

indicating an SL reference power of an S-SSS;

indicating an SL reference power of a physical sidelink broadcast channel PSBCH; and

indicating an SL reference power of a reference signal RS.

Optionally, the determining an SL transmit power based on the first power information includes:

if the first parameter is obtained, determining the SL transmit power at least based on the SL reference power.

Optionally, the apparatus further includes a second determining module configured to:

if the first parameter has not been obtained, determine the SL transmit power at least based on a preset SL reference power.

Optionally, the determining an SL transmit power based on the first power information includes:

determining the SL transmit power based on the SL nominal power; or

determining the SL transmit power based on the SL nominal power and the SL reference power.

Optionally, a value range of the SL nominal power includes [-202,24] or [-202,-60].

Optionally, the SL nominal power includes:

an SL nominal power indicated by a second parameter.

Optionally, the second parameter is used for at least one of the following:

indicating an SL nominal power for the case that the SL transmit power is determined based on a DL pathloss;

indicating an SL nominal power for the case that the SL transmit power is determined based on an SL pathloss;

indicating an SL nominal power of a PSSCH;

indicating an SL nominal power of a PSCCH;

indicating an SL nominal power of a PSFCH;

indicating an SL nominal power of an S-PSS;

indicating an SL nominal power of an S-SSS;

indicating an SL nominal power of a PSBCH; and

indicating an SL nominal power of an RS.

Optionally, the apparatus further includes a third determining module configured to:

under a third condition, determine the SL transmit power based on an SL nominal power of 0; or

under the third condition, determine the SL transmit power at least based on a preset SL reference power; or

under the third condition, determine the SL transmit power at least based on the SL reference power; or

under the third condition, determine the SL transmit power at least based on the UL nominal power; where

the third condition includes at least one of the following:

the terminal has not obtained the second parameter;

the terminal has not obtained the SL nominal power; and

the terminal has obtained that the UL nominal power.

Optionally, the determining an SL transmit power based on the first power information includes:

under a fourth condition, determining the SL transmit power based on the SL nominal power; or

under the fourth condition, determining the SL transmit power based on the SL nominal power and the SL reference power; where

the fourth condition includes at least one of the following:

the terminal has not obtained the first parameter indicating the SL reference power;

the terminal has not obtained a preset SL reference power;

the SL reference power is assumed to be 0; and

the terminal does not consider the SL reference power.

Optionally, the determining an SL transmit power based on the first power information includes:

determining the SL transmit power based on the UL nominal power; or

determining the SL transmit power based on the UL nominal power and the SL reference power. or

determining the SL transmit power based on the UL nominal power and a preset SL reference power.

Optionally, the UL nominal power includes:

a nominal power corresponding to UL; where

the UL includes at least one of the following:

a physical uplink control channel PUCCH;

a physical uplink shared channel PUSCH;

a sounding reference signal SRS;

a physical random access channel PRACH;

a message A msgA;

an UL corresponding to a message B msgB;

a dedicated UL;

a common UL;

an UL scheduled by a specific DCI format;

an UL scheduled by downlink control information DCI of a cell in which a reference signal RS used for calculating a DL pathloss is located;

an UL scheduled by DCI of a cell in which a synchronization signal block SSB used for calculating a DL pathloss is located;

an UL on a supplementing uplink SUL carrier;

an UL on a first cell group CG;

an UL on a first carrier; and

an UL on a first cell.

Optionally, an UL corresponding to the PUSCH includes at least one of the following:

an UL scheduled by a downlink control information DCI format 0-0;

an UL transmitted on a configured grant;

an UL without configured initial transmit power;

an UL in a case that the sounding reference signal resource indicator SRI configuration is not obtained;

an UL scheduled by DCI including no SRI; and

an UL corresponding to a specific number.

Optionally, in a case that the SL transmit power is a PSFCH transmit power, the UL is a PUCCH; or

in a case that the SL transmit power is a PSCCH, PSSCH or RS transmit power, the UL is a PUSCH; or

in a case that the SL transmit power is a sidelink synchronization signal block S-SSB transmit power, the UL is a PRACH.

Optionally, the first CG includes at least one of the following:

a master cell group MCG;

a CG in which SL DCI is located, or a CG configured with SL DCI;

a CG in which an SL bandwidth part BWP is located, or a CG configured with an SL BWP, or a CG associated with an SL BWP;

a CG in which an UL BWP corresponding to an SL BWP is located, or a CG configured with an UL BWP corresponding to an SL BWP, or a CG of an UL BWP which is associated with an SL BWP;

and/or

the first carrier includes at least one of the following:

a primary carrier;

a carrier on which SL DCI is located, or a carrier configured with SL DCI;

a carrier on which an SL BWP is located, or a carrier configured with an SL BWP, or a carrier associated with an SL BWP;

a carrier on which an UL BWP corresponding to an SL BWP is located, or a carrier configured with an UL BWP corresponding to an SL BWP, or a carrier of an UL BWP which is associated with an SL BWP;

a carrier corresponding to a largest carrier identifier in carrier identifiers obtained by the terminal;

a carrier corresponding to a smallest carrier identifier in the carrier identifiers obtained by the terminal; and

a carrier corresponding to a specific carrier identifier in the carrier identifiers obtained by the terminal;

and/or

the first cell includes at least one of the following:

a primary cell;

a cell in which SL DCI is located, or a cell configured with SL DCI;

a cell in which a specific DCI format is located, or a cell configured with a specific DCI format;

a cell in which an UL scheduled by a specific DCI format is located;

a cell in which an SL BWP is located, or a cell configured with an SL BWP, or a cell associated with an SL BWP;

a cell in which an UL BWP corresponding to an SL BWP is located, or a cell configured with an UL BWP corresponding to an SL BWP, or a cell associated with an UL BWP of an SL BWP;

a cell corresponding to a largest cell identifier in cell identifiers obtained by the terminal;
a cell corresponding to a smallest cell identifier in the cell identifiers obtained by the terminal; and
a cell corresponding to a specific cell identifier in the cell identifiers obtained by the terminal.

Optionally, the UL nominal power includes:

an UL nominal power corresponding to a latest UL BWP transmission; or
an UL nominal power corresponding to a previous or last UL BWP transmission; or
an UL nominal power corresponding to a latest UL transmission; or
an UL nominal power corresponding to a previous or last UL transmission; or
an UL nominal power corresponding to a next or 1st UL BWP transmission; or
an UL nominal power corresponding to a next or 1st UL transmission.

Optionally, the first SL transmission includes a current SL transmission or a previous SL transmission; and/or
the first SL resource include a resource used for the current SL transmission or a resource used for the previous SL transmission.

Optionally, the UL nominal power includes at least one of the following:

an UL nominal power indicated by a third parameter;
a dedicated or common or cell-level power value;
a nominal power related to a grant or a nominal power with a grant;
a nominal power unrelated to a grant or a nominal power without a grant;
a preset nominal power;
a preset reference power;
a preamble reception target power; and
a power of a last PRACH transmission.

Optionally, the apparatus further includes a fourth determining module configured to:

under a fifth condition, determine the SL transmit power based on an UL nominal power of 0; or
under the fifth condition, determine the SL transmit power based on an SL nominal power of 0; or
under the fifth condition, determine the SL transmit power at least based on a preset SL reference power; or
under the fifth condition, determine the SL transmit power at least based on the SL reference power.

The fifth condition includes at least one of the following:

the terminal has not obtained the third parameter; and
the terminal has not obtained the UL nominal power.

Optionally, the determining an SL transmit power based on the first power information includes:

under a sixth condition, determining the SL transmit power based on the UL nominal power; or
under the sixth condition, determining the SL transmit power based on the UL nominal power and the SL reference power; or
under the sixth condition, determining the SL transmit power based on the UL nominal power and a preset SL reference power.

The sixth condition includes at least one of the following:

the terminal has not obtained the first parameter indicating the SL reference power;
the terminal has not obtained a preset SL reference power;
the SL reference power is assumed to be 0; and
the terminal does not consider the SL reference power.

Optionally, in a case that the first power information includes the SL nominal power and the UL nominal power, the determining, by the terminal, an SL transmit power based on the first power information includes:

determining, by the terminal, the SL transmit power based on a smaller one of the SL nominal power and the UL nominal power;

determining, by the terminal, the SL transmit power based on a larger one of the SL nominal power and the UL nominal power; and

determining, by the terminal, a first SL transmit power based on the SL nominal power, determining a second SL transmit power based on the UL nominal power, and using a smaller or larger one of the first SL transmit power and the second SL transmit power as the SL transmit power.

Optionally, in a case that the terminal is a first terminal, the SL transmit power is determined based on the first power information; and/or

in a case that the terminal is not the first terminal, the SL transmit power is determined based on other power information at least partially different from the first power information; where
the first terminal includes at least one of the following:

a connected-state terminal;
a terminal within a coverage of a cell;
a terminal with a serving cell;
a terminal that has obtained the first power information; and
one that has obtained a power set configuration.

Optionally, in a case that the terminal is the first terminal, the SL reference power includes:

a reference power corresponding to a PUSCH; or
a reference power corresponding to a PUCCH; or
a reference power corresponding to an SRS; or
0.

Alternatively, in a case that the terminal is a first terminal, the SL reference power includes:

a reference power corresponding to a PRACH; or
a reference power corresponding to a msgA; or
a reference power corresponding to a PUSCH corresponding to a message 3 msg3; or
a reference power corresponding to a PUSCH corresponding to msgB; where
the first terminal includes at least one of the following:

a connected-state terminal;
a terminal within a coverage of a cell; and
a terminal that has obtained a power set configuration;
and/or
in a case that the terminal is a second terminal, the SL reference power includes:

a reference power corresponding to a PRACH; or
a reference power corresponding to a msgA; or
a reference power corresponding to a PUSCH corresponding to a message 3 msg3; or
a reference power corresponding to a PUSCH corresponding to msgB.

Alternatively, in a case that the terminal is a second terminal, the SL reference power includes:

a reference power corresponding to a PUSCH; or
a reference power corresponding to a PUCCH; or
a reference power corresponding to an SRS; or
0.

The second terminal includes at least one of the following:

an idle-state terminal;
a terminal outside a coverage of a cell;

a terminal that has not identified a serving cell;
a terminal that has not obtained the first power information; and
a terminal that has not obtained a power set configuration.

Optionally, in a case that the terminal is a first terminal, the UL nominal power includes:

a nominal power corresponding to a PUSCH; or
a nominal power corresponding to a PUCCH; or
0.

Alternatively, in a case that the terminal is a first terminal, the UL nominal power includes:

a nominal power corresponding to a PRACH; or
a nominal power corresponding to msgA; or
a nominal power corresponding to a PUSCH corresponding to a message 3 msg3; or
a nominal power corresponding to a PUSCH corresponding to msgB; where
the first terminal includes at least one of the following:

a connected-state terminal;
a terminal with a serving cell;
a terminal within a coverage of a cell; and
one that has obtained a power set configuration;
and/or
in a case that the terminal is a second terminal, the UL nominal power includes:

a nominal power corresponding to a PRACH; or
a nominal power corresponding to msgA; or
a nominal power corresponding to a PUSCH corresponding to a message 3 msg3; or
a nominal power corresponding to a PUSCH corresponding to msgB.

Alternatively, in a case that the terminal is a second terminal, the UL nominal power includes:

a nominal power corresponding to a PUSCH; or
a nominal power corresponding to a PUCCH; or
a nominal power corresponding to an SRS; or
0.

The second terminal includes at least one of the following:

an idle-state terminal;
a terminal outside a coverage of a cell;
a terminal that has not identified a serving cell;
a terminal that has not obtained the first power; and
a terminal that has not obtained a power set configuration.

Optionally, the SL reference power includes:
a product of a reference power indicated by a fourth parameter and Y1, where Y1 is a positive real number.
Optionally, the determining an SL transmit power based on the first power information includes:
determining the SL transmit power based on a product of the first power information and Y2, where Y2 is a positive real number.
Optionally, the first power information is power information corresponding to a target resource pool; the target resource pool is a resource pool for an SL channel or signal to be transmitted is located, or the target resource pool is a resource pool corresponding to an SL maximum transmit power used during determining of a transmit power.
The transmit power determining apparatus can improve the SL transmission performance of the terminal.
The transmit power determining apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal listed in the embodiments of this application, and other devices may be a server, a network attached storage (Network Attached Storage, NAS), and the like. This is not limited in the embodiments of this application.

The transmit power determining apparatus provided in this embodiment of this application can implement the processes implemented in the method embodiment in FIG. 2, with the same technical effects achieved. To avoid repetition, details are not described herein again.

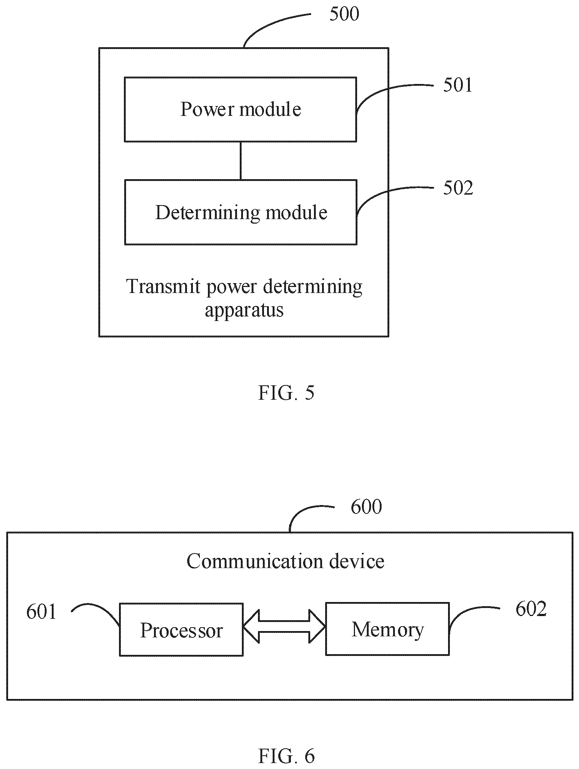

Refer to FIG. 5. FIG. 5 is a structural diagram of a transmit power determining apparatus according to an embodiment of this application. As shown in FIG. 5, the transmit power determining apparatus 500 includes:

a power module 501, configured to determine or obtain a sidelink SL maximum transmit power; and

a determining module 502, configured to determine a transmit power of a first channel or a first signal based on the SL maximum transmit power, where the first channel or the first signal includes at least one of a sidelink primary synchronization signal S-PSS, a sidelink secondary synchronization signal S-SSS, and a physical sidelink broadcast channel PSBCH; where

the SL maximum transmit power includes at least one of the following:

an SL maximum transmission power corresponding to a first resource pool;

an SL maximum transmit power corresponding to the first resource pool;

a maximum Uu interface transmit power; and

a maximum transmit power of the first channel or the first signal.

Optionally, the determining a transmit power of a first channel or a first signal based on the SL maximum transmit power includes:

determining the transmit power of the first channel or the first signal based on the SL maximum transmit power and a first power; where

the first power is a second transmit power of the first channel or the first signal obtained through calculation by the terminal based on a formula.

Optionally, the determining the transmit power of the first channel or the first signal based on the SL maximum transmit power and a first power includes:

determining a smaller one of the SL maximum transmit power and the first power as the transmit power of the first channel or the first signal.

Optionally, the first resource pool includes at least one of the following:

a resource pool corresponding to a largest resource pool identifier in resource pool identifiers obtained by the terminal;

a resource pool corresponding to a smallest resource pool identifier in the resource pool identifiers obtained by the terminal;

a resource pool corresponding to a specific resource pool identifier in the resource pool identifiers obtained by the terminal;

a resource pool whose frequency domain resources overlap with a frequency domain resource of the first channel or the first signal;

a neaerest resource pool;

a previous or last resource pool before a time domain resource of the first channel or the first signal;

a next or 1st resource pool after the time domain resource of the first channel or the first signal;

a resource pool with a largest or smallest SL transmit power in resource pools corresponding to the terminal;

a resource pool with a largest channel busy rate CBR value in the resource pools corresponding to the terminal;

a resource pool with a smallest CBR value in the resource pools corresponding to the terminal;

a resource pool corresponding to a specific CBR value in the resource pools corresponding to the terminal;

a resource pool with a largest channel occupancy ratio CR value in the resource pools corresponding to the terminal;

a resource pool with a smallest CR value in the resource pools corresponding to the terminal;

a resource pool corresponding to a specific CR value in the resource pools corresponding to the terminal;

a resource pool with an SL maximum transmit power being greater than or equal to a first power in the resource pools corresponding to the terminal;

a resource pool with an SL maximum transmit power being less than or equal to the first power in the resource pools corresponding to the terminal; and

a resource pool with an SL maximum transmit power being closest to the first power in the resource pools corresponding to the terminal.

Optionally, the maximum Uu interface transmit power includes at least one of the following:

a maximum Uu interface transmit power corresponding to a second cell group CG;
a maximum Uu interface transmit power corresponding to a second carrier;
a maximum Uu interface transmit power corresponding to a second cell;
a maximum Uu interface transmit power corresponding to a latest UL BWP or UL transmission;
a maximum Uu interface transmit power corresponding to a previous or last UL BWP or UL transmission before a time domain resource of the first channel or the first signal;
a maximum Uu interface transmit power corresponding to a next or 1st UL BWP or UL transmission after the time domain resource of the first channel or the first signal;
a maximum Uu interface transmit power corresponding to a previous UL BWP or UL transmission on the time domain resource of the first channel or the first signal;
a maximum Uu interface transmit power greater than or equal to the first power; and
a maximum Uu interface transmit power less than or equal to the first power; and
a maximum Uu interface transmit power closest to the first power.

Optionally, the time domain resource of the first channel or the first signal includes at least one of the following: a time domain resource for transmitting the first channel or the first signal, and a time domain resource for receiving the first channel or the first signal.

Optionally, the second CG includes at least one of the following:

a master cell group MCG;
a CG in which SL DCI is located, or a CG configured with SL DCI;
a CG in which an SL bandwidth part BWP is located, or a CG configured with an SL BWP, or a CG associated with an SL BWP; and
a CG in which an UL BWP corresponding to an SL BWP is located, or a CG configured with an UL BWP corresponding to an SL BWP, or a CG of an UL BWP which is associated with an SL BWP;
and/or
the second carrier includes at least one of the following:

a primary carrier;
a carrier on which SL DCI is located, or a carrier configured with SL DCI;
a carrier on which an SL bandwidth part BWP is located, or a carrier configured with an SL BWP, or a carrier associated with an SL BWP;
a carrier on which an UL BWP corresponding to an SL BWP is located, or a carrier configured with an UL BWP corresponding to an SL BWP, or a carrier of an UL BWP which is associated with an SL BWP;
a carrier corresponding to a largest carrier identifier in carrier identifiers obtained by the terminal;
a carrier corresponding to a smallest carrier identifier in the carrier identifiers obtained by the terminal; and
a carrier corresponding to a specific carrier identifier in the carrier identifiers obtained by the terminal;
and/or
the second cell includes at least one of the following:

a primary cell;
a cell in which SL DCI is located, or a cell configured with SL DCI;
a cell in which an SL bandwidth part BWP is located, or a cell configured with an SL BWP, or a cell associated with an SL BWP;
a cell in which an UL BWP corresponding to an SL BWP is located, or a cell configured with an UL BWP corresponding to an SL BWP, or a cell associated with an UL BWP of an SL BWP;
a cell in which an UL BWP corresponding to an SL BWP is located, or a cell configured with an UL BWP corresponding to an SL BWP, or a cell associated with an UL BWP of an SL BWP;
a cell corresponding to a largest cell identifier in cell identifiers obtained by the terminal;
a cell corresponding to a smallest cell identifier in the cell identifiers obtained by the terminal; and
a cell corresponding to a specific cell identifier in the cell identifiers obtained by the terminal.

Optionally, the SL maximum transmit power includes at least one of the following:

a largest or smallest SL maximum transmit power in SL maximum transmit powers corresponding to the terminal;
an SL maximum transmit power with a largest identifier in the SL maximum transmit powers corresponding to the terminal;

an SL maximum transmit power with a smallest identifier in the SL maximum transmit powers corresponding to the terminal;

an SL maximum transmit power with a specific identifier in the SL maximum transmit powers corresponding to the terminal;

an SL maximum transmit power greater than or equal to a first power in the SL maximum transmit powers corresponding to the terminal;

an SL maximum transmit power less than or equal to the first power in the SL maximum transmit powers corresponding to the terminal;

an SL maximum transmit power closest to the first power in the SL maximum transmit powers corresponding to the terminal;

an SL maximum transmit power corresponding to a second channel or a second signal;

an SL maximum transmit power corresponding to a first priority;

an SL maximum transmit power corresponding to a first CBR value;

an SL maximum transmit power corresponding to a first CBR range;

an SL maximum transmit power corresponding to a first CR value; and

an SL maximum transmit power corresponding to a default configuration.

Optionally, the second channel includes at least one of the following:

a channel with a highest priority;
a channel with a lowest priority;
a channel with a specific priority;
a PSCCH;
a PSSCH;
a PSFCH;
a RACH; and
a PUSCH;
and/or
the second signal includes at least one of the following:
an uplink configured grant UL CG, msg3, and msg3 retransmission.

Optionally, the PUSCH includes at least one of the following:

a PUSCH corresponding to a configured grant;
a PUSCH configured with no reference power; and
a DCI-scheduled PUSCH not including a sounding reference signal resource indicator SRI.

Optionally, the first CBR range corresponds to one transmission parameter configuration, or the first CBR range corresponds to one SL maximum transmit power; or
the first CBR range corresponds to a plurality of SL maximum transmit powers, and the SL maximum transmit power is one of the plurality of SL maximum transmit powers.

The transmit power determining apparatus can improve the SL transmission performance of the terminal.

The transmit power determining apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal listed in the embodiments of this application, and other devices may be a server, a network attached storage (Network Attached Storage, NAS), and the like. This is not limited in the embodiments of this application.

The transmit power determining apparatus provided in this embodiment of this application can implement the processes implemented in the method embodiment in FIG. 3, with the same technical effects achieved. To avoid repetition, details are not described herein again.

Optionally, as shown in FIG. 6, an embodiment of this application further provides a communication device 600, including a processor 601 and a memory 602, and the memory 602 stores a program or instructions capable of running on the processor 601. In a case that the communication device 600 is a terminal, when the program or instructions are executed by the processor 601, the steps of the foregoing embodiments of the two transmit power determining methods of the terminal may be implemented, with the same technical effects achieved. To avoid repetition, details are not described herein again.

An embodiment of this application further provides a terminal, including a processor and a communication interface, where the processor is configured to determine or obtain first power information, where the first power information includes at least one of the following: a sidelink SL reference power, an SL nominal power, and an uplink UL nominal power; and determine an SL transmit power based on the first power information. The terminal embodiment corresponds to the foregoing terminal side method embodiment, and the implementation processes and implementations of the foregoing method embodiments can be applied to the terminal embodiments, with the same technical effects achieved.

An embodiment of this application further provides a terminal, including a processor and a communication interface, where the processor is configured to determine or obtain a sidelink SL maximum transmit power; and determine a transmit power of a first channel or a first signal based on the SL maximum transmit power, where the first channel or the first signal includes at least one of a sidelink primary synchronization signal S-PSS, a sidelink secondary synchronization signal S-SSS, and a physical sidelink broadcast channel PSBCH; where the SL maximum transmit power includes at least one of the following: an SL maximum transmission power corresponding to a first resource pool; an SL maximum transmit power corresponding to the first resource pool; a maximum Uu interface transmit power; and a maximum transmit power of the first channel or the first signal. The terminal embodiment corresponds to the foregoing terminal side method embodiment, and the implementation processes and implementations of the foregoing method embodiments can be applied to the terminal embodiments, with the same technical effects achieved.

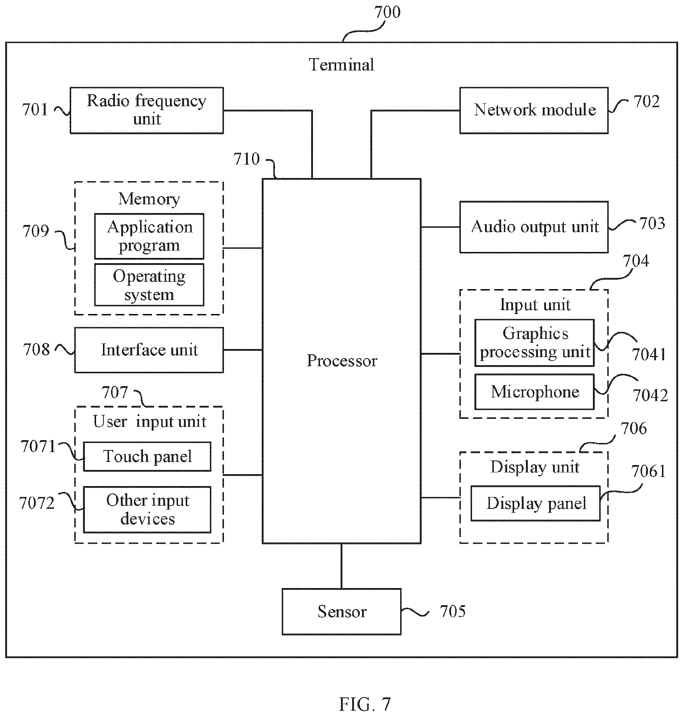

Specifically, as shown in FIG. 7, an embodiment of this application further provides a terminal. The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, after receiving downlink data from a network device, the radio frequency unit 701 sends the downlink data to the processor 710 for processing; and the radio frequency unit 701 also sends uplink data to the network device. Generally, the radio frequency unit 701 includes, but is not limited to, an antenna, an amplifier, a transceiver, a coupler, a low noise amplifier, a duplexer, and the like.

The memory 709 may be configured to store software programs or instructions and various data. The memory 709 may mainly include a first storage area for storing programs or instructions and a second storage area for storing data, where the first storage area may store an operating system, an application program or instructions required by at least one function (for example, an audio playing function and an image playing function), and the like. In addition, the memory 709 may be a volatile memory or a non-volatile memory, or the memory 709 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 709 described in this embodiment this application includes but is not limited to these and any other suitable types of memories.

The processor 710 may include one or more processing units. Optionally, the processor 710 integrates an application processor and a modem processor. The application processor mainly processes operations related to an operating system, a user interface, an application program, and the like. The modem processor mainly processes wireless communication signals, for example, a baseband processor. It should be understood that alternatively, the modem processor may not be integrated into the processor 710.

In one embodiment,

the processor 710 is configured to determine or obtain first power information, where the first power information includes at least one of the following: a sidelink SL reference power, an SL nominal power, and an uplink UL nominal power; and determine an SL transmit power based on the first power information.

Optionally, a value range of the SL reference power is [-202,24].

Optionally, the SL reference power includes:

an SL reference power indicated by a first parameter; or
an SL reference power that is determined based on at least one of a reference power corresponding to UL and a nominal power corresponding to UL.

Optionally, the first parameter is used for at least one of the following:

indicating an SL reference power for a case that the SL transmit power is determined based on a downlink DL pathloss;
indicating an SL reference power for a case that the SL transmit power is determined based on an SL pathloss;
indicating an SL reference power of a physical sidelink shared channel PSSCH;
indicating an SL reference power of a physical sidelink control channel PSCCH;
indicating an SL reference power of a physical sidelink feedback channel PSFCH;
indicating an SL reference power of an S-PSS;
indicating an SL reference power of an S-SSS;
indicating an SL reference power of a physical sidelink broadcast channel PSBCH; and
indicating an SL reference power of a reference signal RS.

Optionally, the determining, by the terminal, an SL transmit power based on the first power information includes: if the terminal obtains the first parameter, determining, by the terminal, the SL transmit power at least based on the SL reference power.

Optionally, the processor 710 is further configured to:
if the terminal has not obtained the first parameter, determine the SL transmit power at least based on a preset SL reference power.

Optionally, the determining an SL transmit power based on the first power information includes:

determining the SL transmit power based on the SL nominal power; or
determining the SL transmit power based on the SL nominal power and the SL reference power.

Optionally, a value range of the SL nominal power includes [-202,24] or [-202,-60].

Optionally, the SL nominal power includes:
an SL nominal power indicated by a second parameter.

Optionally, the second parameter is used for at least one of the following:

indicating an SL nominal power for the case that the SL transmit power is determined based on a DL pathloss;
indicating an SL nominal power for the case that the SL transmit power is determined based on an SL pathloss;
indicating an SL nominal power of a PSSCH;
indicating an SL nominal power of a PSCCH;
indicating an SL nominal power of a PSFCH;
indicating an SL nominal power of an S-PSS;
indicating an SL nominal power of an S-SSS;
indicating an SL nominal power of a PSBCH; and
indicating an SL nominal power of an RS.

Optionally, the processor 710 is further configured to:

under a third condition, determine the SL transmit power based on an SL nominal power of 0; or
under the third condition, determine the SL transmit power at least based on a preset SL reference power; or
under the third condition, determine the SL transmit power at least based on the SL reference power; or
under the third condition, determine the SL transmit power at least based on the UL nominal power; where

the third condition includes at least one of the following:

the terminal has not obtained the second parameter;
the terminal has not obtained the SL nominal power; and
the terminal has obtained that the UL nominal power.

Optionally, the determining an SL transmit power based on the first power information includes:

under a fourth condition, determining the SL transmit power based on the SL nominal power; or
under the fourth condition, determining the SL transmit power based on the SL nominal power and the SL reference power; where
the fourth condition includes at least one of the following:

the terminal has not obtained the first parameter indicating the SL reference power;
the terminal has not obtained a preset SL reference power;
the SL reference power is assumed to be 0; and
the terminal does not consider the SL reference power.

Optionally, the determining an SL transmit power based on the first power information includes:

determining the SL transmit power based on the UL nominal power; or
determining the SL transmit power based on the UL nominal power and the SL reference power. or
determining the SL transmit power based on the UL nominal power and a preset SL reference power.

Optionally, the UL nominal power includes:

a nominal power corresponding to UL; where
the UL includes at least one of the following:

a physical uplink control channel PUCCH;
a physical uplink shared channel PUSCH;
a sounding reference signal SRS;
a physical random access channel PRACH;
a message A msgA;
an UL corresponding to a message B msgB;
a dedicated UL;
a common UL;
an UL scheduled by a specific DCI format;
an UL scheduled by downlink control information DCI of a cell in which a reference signal RS used for calculating a DL pathloss is located;
an UL scheduled by DCI of a cell in which a synchronization signal block SSB used for calculating a DL pathloss is located;
an UL on a supplementing uplink SUL carrier;
an UL on a first cell group CG;
an UL on a first carrier; and
an UL on a first cell.

Optionally, an UL corresponding to the PUSCH includes at least one of the following:

an UL scheduled by a downlink control information DCI format 0-0;
an UL transmitted on a configured grant;
an UL without configured initial transmit power;
an UL in a case that the sounding reference signal resource indicator SRI configuration is not obtained;
an UL scheduled by DCI including no SRI; and
an UL corresponding to a specific number.

Optionally, in a case that the SL transmit power is a PSFCH transmit power, the UL is a PUCCH; or

in a case that the SL transmit power is a PSCCH, PSSCH or RS transmit power, the UL is a PUSCH; or
in a case that the SL transmit power is a sidelink synchronization signal block S-SSB transmit power, the UL is a PRACH.

Optionally, the first CG includes at least one of the following:

a master cell group MCG;
a CG in which SL DCI is located, or a CG configured with SL DCI;
a CG in which an SL bandwidth part BWP is located, or a CG configured with an SL BWP, or a CG associated with an SL BWP;
a CG in which an UL BWP corresponding to an SL BWP is located, or a CG configured with an UL BWP corresponding to an SL BWP, or a CG of an UL BWP which is associated with an SL BWP;
and/or
the first carrier includes at least one of the following:

a primary carrier;
a carrier on which SL DCI is located, or a carrier configured with SL DCI;
a carrier on which an SL BWP is located, or a carrier configured with an SL BWP, or a carrier associated with an SL BWP;
a carrier on which an UL BWP corresponding to an SL BWP is located, or a carrier configured with an UL BWP corresponding to an SL BWP, or a carrier of an UL BWP which is associated with an SL BWP;
a carrier corresponding to a largest carrier identifier in carrier identifiers obtained by the terminal;
a carrier corresponding to a smallest carrier identifier in the carrier identifiers obtained by the terminal; and
a carrier corresponding to a specific carrier identifier in the carrier identifiers obtained by the terminal;
and/or
the first cell includes at least one of the following:

a primary cell;
a cell in which a specific DCI format is located, or a cell configured with a specific DCI format;
a cell in which an UL scheduled by a specific DCI format is located;
a cell in which SL DCI is located, or a cell configured with SL DCI;
a cell in which an SL BWP is located, or a cell configured with an SL BWP, or a cell associated with an SL BWP;
a cell in which an UL BWP corresponding to an SL BWP is located, or a cell configured with an UL BWP corresponding to an SL BWP, or a cell associated with an UL BWP of an SL BWP;
a cell corresponding to a largest cell identifier in cell identifiers obtained by the terminal;
a cell corresponding to a smallest cell identifier in the cell identifiers obtained by the terminal; and
a cell corresponding to a specific cell identifier in the cell identifiers obtained by the terminal.

Optionally, the UL nominal power includes:

an UL nominal power corresponding to a latest UL BWP transmission; or
an UL nominal power corresponding to a previous or last UL BWP transmission; or
an UL nominal power corresponding to a latest UL transmission; or
an UL nominal power corresponding to a previous or last UL transmission; or
an UL nominal power corresponding to a next or 1st UL BWP transmission; or
an UL nominal power corresponding to a next or 1st UL transmission.

Optionally, the first SL transmission includes a current SL transmission or a previous SL transmission; and/or
the first SL resource include a resource used for the current SL transmission or a resource used for the previous SL transmission.

Optionally, the UL nominal power includes at least one of the following:

an UL nominal power indicated by a third parameter;
a dedicated or common or cell-level power value;
a nominal power related to a grant or a nominal power with a grant;
a nominal power unrelated to a grant or a nominal power without a grant;
a preset nominal power;

a preset reference power;
a preamble reception target power; and
a power of a last PRACH transmission.

Optionally, the processor 710 is further configured to:

under a fifth condition, determine the SL transmit power based on an UL nominal power of 0; or
under the fifth condition, determine the SL transmit power based on an SL nominal power of 0; or
under the fifth condition, determine the SL transmit power at least based on a preset SL reference power; or
under the fifth condition, determine the SL transmit power at least based on the SL reference power.

The fifth condition includes at least one of the following:

the terminal has not obtained the third parameter; and
the terminal has not obtained the UL nominal power.

Optionally, the determining an SL transmit power based on the first power information includes:

under a sixth condition, determining the SL transmit power based on the UL nominal power; or
under the sixth condition, determining the SL transmit power based on the UL nominal power and the SL reference power; or
under the sixth condition, determining the SL transmit power based on the UL nominal power and a preset SL reference power.

The sixth condition includes at least one of the following:

the terminal has not obtained the first parameter indicating the SL reference power;
the terminal has not obtained a preset SL reference power;
the SL reference power is assumed to be 0; and
the terminal does not consider the SL reference power.

Optionally, in a case that the first power information includes the SL nominal power and the UL nominal power, the determining, by the terminal, an SL transmit power based on the first power information includes:

determining, by the terminal, the SL transmit power based on a smaller one of the SL nominal power and the UL nominal power;
determining, by the terminal, the SL transmit power based on a larger one of the SL nominal power and the UL nominal power; and
determining, by the terminal, a first SL transmit power based on the SL nominal power, determining a second SL transmit power based on the UL nominal power, and using a smaller or larger one of the first SL transmit power and the second SL transmit power as the SL transmit power.

Optionally, in a case that the terminal is a first terminal, the SL transmit power is determined based on the first power information; and/or

in a case that the terminal is not the first terminal, the SL transmit power is determined based on other power information at least partially different from the first power information; where
the first terminal includes at least one of the following:

a connected-state terminal;
a terminal within a coverage of a cell;
a terminal with a serving cell;
a terminal that has obtained the first power information; and
one that has obtained a power set configuration.

Optionally, in a case that the terminal is a first terminal, the SL reference power includes:

a reference power corresponding to a PUSCH; or

a reference power corresponding to a PUCCH; or
a reference power corresponding to an SRS; or
0.

Alternatively, in a case that the terminal is a first terminal, the SL reference power includes:

a reference power corresponding to a PRACH; or
a reference power corresponding to a msgA; or
a reference power corresponding to a PUSCH corresponding to a message 3 msg3; or
a reference power corresponding to a PUSCH corresponding to msgB; where
the first terminal includes at least one of the following:

a connected-state terminal;
a terminal within a coverage of a cell; and
a terminal that has obtained a power set configuration;
and/or
in a case that the terminal is a second terminal, the SL reference power includes:

a reference power corresponding to a PRACH; or
a reference power corresponding to a msgA; or
a reference power corresponding to a PUSCH corresponding to a message 3 msg3; or
a reference power corresponding to a PUSCH corresponding to msgB.

Alternatively, in a case that the terminal is a second terminal, the SL reference power includes:

a reference power corresponding to a PUSCH; or
a reference power corresponding to a PUCCH; or
a reference power corresponding to an SRS; or
0.

The second terminal includes at least one of the following:

an idle-state terminal;
a terminal outside a coverage of a cell;
a terminal that has not identified a serving cell;
a terminal that has not obtained the first power information; and
a terminal that has not obtained a power set configuration.

Optionally, in a case that the terminal is a first terminal, the UL nominal power includes:

a nominal power corresponding to a PUSCH; or
a nominal power corresponding to a PUCCH; or
0.

Alternatively, in a case that the terminal is a first terminal, the UL nominal power includes:

a nominal power corresponding to a PRACH; or
a nominal power corresponding to msgA; or
a nominal power corresponding to a PUSCH corresponding to a message 3 msg3; or
a nominal power corresponding to a PUSCH corresponding to msgB; where
the first terminal includes at least one of the following:

a connected-state terminal;
a terminal with a serving cell;
a terminal within a coverage of a cell; and
one that has obtained a power set configuration;
and/or
in a case that the terminal is a second terminal, the UL nominal power includes:

a nominal power corresponding to a PRACH; or
a nominal power corresponding to msgA; or
a nominal power corresponding to a PUSCH corresponding to a message 3 msg3; or
a nominal power corresponding to a PUSCH corresponding to msgB.

Alternatively, in a case that the terminal is a second terminal, the UL nominal power includes:

a nominal power corresponding to a PUSCH; or
a nominal power corresponding to a PUCCH; or
a nominal power corresponding to an SRS; or
0.

The second terminal includes at least one of the following:

an idle-state terminal;
a terminal outside a coverage of a cell;
a terminal that has not identified a serving cell;
a terminal that has not obtained the first power; and
a terminal that has not obtained a power set configuration.

Optionally, the SL reference power includes:
a product of a reference power indicated by a fourth parameter and Y1, where Y1 is a positive real number.
Optionally, the determining an SL transmit power based on the first power information includes:
determining the SL transmit power based on a product of the first power information and Y2, where Y2 is a positive real number.
Optionally, the first power information is power information corresponding to a target resource pool; the target resource pool is a resource pool for an SL channel or signal to be transmitted is located, or the target resource pool is a resource pool corresponding to an SL maximum transmit power used during determining of a transmit power.
In another embodiment,

the processor 710 is configured to determine or obtain a sidelink SL maximum transmit power; and determine a transmit power of a first channel or a first signal based on the SL maximum transmit power, where the first channel or the first signal includes at least one of a sidelink primary synchronization signal S-PSS, a sidelink secondary synchronization signal S-SSS, and a physical sidelink broadcast channel PSBCH; where
the SL maximum transmit power includes at least one of the following:

an SL maximum transmission power corresponding to a first resource pool;
an SL maximum transmit power corresponding to the first resource pool;
a maximum Uu interface transmit power; and
a maximum transmit power of the first channel or the first signal.

Optionally, the determining a transmit power of a first channel or a first signal based on the SL maximum transmit power includes:

determining the transmit power of the first channel or the first signal based on the SL maximum transmit power and a first power; where
the first power is a second transmit power of the first channel or the first signal obtained through calculation by the terminal based on a formula.

Optionally, the determining the transmit power of the first channel or the first signal based on the SL maximum transmit power and a first power includes:
determining a smaller one of the SL maximum transmit power and the first power as the transmit power of the first channel or the first signal.
Optionally, the first resource pool includes at least one of the following:

a resource pool corresponding to a largest resource pool identifier in resource pool identifiers obtained by the terminal;
a resource pool corresponding to a smallest resource pool identifier in the resource pool identifiers obtained by the terminal;

a resource pool corresponding to a specific resource pool identifier in the resource pool identifiers obtained by the terminal;

a resource pool whose frequency domain resources overlap with a frequency domain resource of the first channel or the first signal;

a neaerest resource pool;

a previous or last resource pool before a time domain resource of the first channel or the first signal;

a next or 1st resource pool after the time domain resource of the first channel or the first signal;

a resource pool with a largest or smallest SL transmit power in resource pools corresponding to the terminal;

a resource pool with a largest channel busy rate CBR value in the resource pools corresponding to the terminal;

a resource pool with a smallest CBR value in the resource pools corresponding to the terminal;

a resource pool corresponding to a specific CBR value in the resource pools corresponding to the terminal;

a resource pool with a largest channel occupancy ratio CR value in the resource pools corresponding to the terminal;

a resource pool with a smallest CR value in the resource pools corresponding to the terminal;

a resource pool corresponding to a specific CR value in the resource pools corresponding to the terminal;

a resource pool with an SL maximum transmit power being greater than or equal to a first power in the resource pools corresponding to the terminal;

a resource pool with an SL maximum transmit power being less than or equal to the first power in the resource pools corresponding to the terminal; and

a resource pool with an SL maximum transmit power being closest to the first power in the resource pools corresponding to the terminal.

Optionally, the maximum Uu interface transmit power includes at least one of the following:

a maximum Uu interface transmit power corresponding to a second cell group CG;

a maximum Uu interface transmit power corresponding to a second carrier;

a maximum Uu interface transmit power corresponding to a second cell;

a maximum Uu interface transmit power corresponding to a latest UL BWP or UL transmission;

a maximum Uu interface transmit power corresponding to a previous or last UL BWP or UL transmission before a time domain resource of the first channel or the first signal;

a maximum Uu interface transmit power corresponding to a next or 1st UL BWP or UL transmission after the time domain resource of the first channel or the first signal;

a maximum Uu interface transmit power greater than or equal to the first power; and

a maximum Uu interface transmit power less than or equal to the first power; and

a maximum Uu interface transmit power closest to the first power.

Optionally, the time domain resource of the first channel or the first signal includes at least one of the following: a time domain resource for transmitting the first channel or the first signal, and a time domain resource for receiving the first channel or the first signal.

Optionally, the second CG includes at least one of the following:

a master cell group MCG;

a CG in which SL DCI is located, or a CG configured with SL DCI;

a CG in which an SL bandwidth part BWP is located, or a CG configured with an SL BWP, or a CG associated with an SL BWPCG of an UL BWP which is associated with an SL BWP; and

a CG in which an UL BWP corresponding to an SL BWP is located, or a CG configured with an UL BWP corresponding to an SL BWP, or a CG of an UL BWP which is associated with an SL BWP;

and/or

the second carrier includes at least one of the following:

a primary carrier;

a carrier on which SL DCI is located, or a carrier configured with SL DCI;

a carrier on which an SL bandwidth part BWP is located, or a carrier configured with an SL BWP, or a carrier associated with an SL BWP;

a carrier on which an UL BWP corresponding to an SL BWP is located, or a carrier configured with an UL BWP corresponding to an SL BWP, or a carrier of an UL BWP which is associated with an SL BWP;

a carrier corresponding to a largest carrier identifier in carrier identifiers obtained by the terminal;

a carrier corresponding to a smallest carrier identifier in the carrier identifiers obtained by the terminal; and

a carrier corresponding to a specific carrier identifier in the carrier identifiers obtained by the terminal;

and/or

the second cell includes at least one of the following:

a primary cell;

a cell in which SL DCI is located, or a cell configured with SL DCI;

a cell in which an SL bandwidth part BWP is located, or a cell configured with an SL BWP, or a cell associated with an SL BWP;

a cell in which an UL BWP corresponding to an SL BWP is located, or a cell configured with an UL BWP corresponding to an SL BWP, or a cell associated with an UL BWP of an SL BWP;

a cell in which an UL BWP corresponding to an SL BWP is located, or a cell configured with an UL BWP corresponding to an SL BWP, or a cell associated with an UL BWP of an SL BWP;

a cell corresponding to a largest cell identifier in cell identifiers obtained by the terminal;

a cell corresponding to a smallest cell identifier in the cell identifiers obtained by the terminal; and

a cell corresponding to a specific cell identifier in the cell identifiers obtained by the terminal.

Optionally, the SL maximum transmit power includes at least one of the following:

a largest or smallest SL maximum transmit power in SL maximum transmit powers corresponding to the terminal;

an SL maximum transmit power with a largest identifier in the SL maximum transmit powers corresponding to the terminal;

an SL maximum transmit power with a smallest identifier in the SL maximum transmit powers corresponding to the terminal;

an SL maximum transmit power with a specific identifier in the SL maximum transmit powers corresponding to the terminal;

an SL maximum transmit power greater than or equal to a first power in the SL maximum transmit powers corresponding to the terminal;

an SL maximum transmit power less than or equal to the first power in the SL maximum transmit powers corresponding to the terminal;

an SL maximum transmit power closest to the first power in the SL maximum transmit powers corresponding to the terminal;

an SL maximum transmit power corresponding to a second channel or a second signal;

an SL maximum transmit power corresponding to a first priority;

an SL maximum transmit power corresponding to a first CBR value;

an SL maximum transmit power corresponding to a first CBR range;

an SL maximum transmit power corresponding to a first CR value; and

an SL maximum transmit power corresponding to a default configuration.

Optionally, the second channel includes at least one of the following:

a channel with a highest priority;

a channel with a lowest priority;

a channel with a specific priority;

a PSCCH;

a PSSCH;

a PSFCH;

a RACH; and

a PUSCH;

and/or

the second signal includes at least one of the following:

an uplink configured grant UL CG, msg3, and msg3 retransmission.

Optionally, the PUSCH includes at least one of the following:

a PUSCH corresponding to a configured grant;

a PUSCH configured with no reference power; and

a DCI-scheduled PUSCH not including a sounding reference signal resource indicator SRI.

Optionally, the first CBR range corresponds to one transmission parameter configuration, or the first CBR range corresponds to one SL maximum transmit power; or

the first CBR range corresponds to a plurality of SL maximum transmit powers, and the SL maximum transmit power is one of the plurality of SL maximum transmit powers.

The terminal can improve the SL transmission performance of the terminal.

an embodiment of this application further provides a readable storage medium, where a program or instructions are stored on the readable storage medium, and when the program or the instructions are executed by a processor, the steps of the transmit power determining method provided in the embodiments of this application are implemented.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface, the communication interface is coupled to the processor, and the processor is configured to run a program or an instruction to implement the processes of the foregoing embodiments of the transmit power determining method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, the computer program/program product is stored in a storage medium, and when being executed by at least one processor, the computer program/program product is configured to implement the processes of the foregoing embodiments of the transmit power determining method, with the same technical effects achieved. To avoid repetition, details are not repeated herein.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for indicating a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A transmit power determining method, comprising:

   determining or obtaining, by a terminal, first power information, wherein the first power information comprises at least one of the following: a sidelink SL reference power, an SL nominal power, and an uplink UL nominal power; and

   determining, by the terminal, an SL transmit power based on the first power information.

2. The method according to claim 1, wherein a value range of the SL reference power is [-202,24].

3. The method according to claim 1, wherein the SL reference power comprises:

> an SL reference power indicated by a first parameter; or
> an SL reference power that is determined based on at least one of a reference power corresponding to UL and a nominal power corresponding to UL.

4. The method according to claim 3, wherein the first parameter is used for at least one of the following:

> indicating an SL reference power for a case that the SL transmit power is determined based on a downlink DL pathloss;
> indicating an SL reference power for a case that the SL transmit power is determined based on an SL pathloss;
> indicating an SL reference power of a physical sidelink shared channel PSSCH;
> indicating an SL reference power of a physical sidelink control channel PSCCH;
> indicating an SL reference power of a physical sidelink feedback channel PSFCH;
> indicating an SL reference power of an S-PSS;
> indicating an SL reference power of an S-SSS;
> indicating an SL reference power of a physical sidelink broadcast channel PSBCH; and
> indicating an SL reference power of a reference signal RS.

5. The method according to claim 3 or 4, wherein the determining, by the terminal, an SL transmit power based on the first power information comprises:
if the terminal obtains the first parameter, determining, by the terminal, the SL transmit power at least based on the SL reference power.

6. The method according to claim 3 or 4, wherein the method further comprises:
if the terminal has not obtained the first parameter, determining, by the terminal, the SL transmit power at least based on a preset SL reference power.

7. The method according to any one of claims 1 to 4, wherein the determining, by the terminal, an SL transmit power based on the first power information comprises:

> determining, by the terminal, the SL transmit power based on the SL nominal power; or
> determining, by the terminal, the SL transmit power based on the SL nominal power and the SL reference power.

8. The method according to claim 7, wherein a value range of the SL nominal power comprises [-202,24] or [-202,-60].

9. The method according to claim 7, wherein the SL nominal power comprises:
an SL nominal power indicated by a second parameter.

10. The method according to claim 9, wherein the second parameter is used for at least one of the following:

> indicating an SL nominal power for the case that the SL transmit power is determined based on a DL pathloss;
> indicating an SL nominal power for the case that the SL transmit power is determined based on an SL pathloss;
> indicating an SL nominal power of a PSSCH;
> indicating an SL nominal power of a PSCCH;
> indicating an SL nominal power of a PSFCH;
> indicating an SL nominal power of an S-PSS;
> indicating an SL nominal power of an S-SSS;
> indicating an SL nominal power of a PSBCH; and
> indicating an SL nominal power of an RS.

11. The method according to claim 9, wherein the method further comprises:

> under a third condition, determining, by the terminal, the SL transmit power based on an SL nominal power of 0; or
> under the third condition, determining, by the terminal, the SL transmit power at least based on a preset SL reference power; or
> under the third condition, determining, by the terminal, the SL transmit power at least based on the SL reference power; or

under the third condition, determining, by the terminal, the SL transmit power at least based on the UL nominal power; wherein
the third condition comprises at least one of the following:

the terminal has not obtained the second parameter;
the terminal has not obtained the SL nominal power; and
the terminal has obtained that the UL nominal power.

12. The method according to claim 7, wherein the determining, by the terminal, an SL transmit power based on the first power information comprises:

under a fourth condition, determining, by the terminal, the SL transmit power based on the SL nominal power; or
under the fourth condition, determining, by the terminal, the SL transmit power based on the SL nominal power and the SL reference power; wherein
the fourth condition comprises at least one of the following:

the terminal has not obtained the first parameter indicating the SL reference power;
the terminal has not obtained a preset SL reference power;
the SL reference power is assumed to be 0; and
the terminal does not consider the SL reference power.

13. The method according to any one of claims 1 to 4, wherein the determining, by the terminal, an SL transmit power based on the first power information comprises:

determining, by the terminal, the SL transmit power based on the UL nominal power; or
determining, by the terminal, the SL transmit power based on the UL nominal power and the SL reference power; or
determining, by the terminal, the SL transmit power based on the UL nominal power and a preset SL reference power.

14. The method according to claim 13, wherein the UL nominal power comprises:

a nominal power corresponding to UL; wherein
the UL comprises at least one of the following:

a physical uplink control channel PUCCH;
a physical uplink shared channel PUSCH;
a sounding reference signal SRS;
a physical random access channel PRACH;
a message A msgA;
an UL corresponding to a message B msgB;
a dedicated UL;
a common UL;
an UL scheduled by a specific DCI format;
an UL scheduled by downlink control information DCI of a cell in which a reference signal RS used for calculating a DL pathloss is located;
an UL scheduled by DCI of a cell in which a synchronization signal block SSB used for calculating a DL pathloss is located;
an UL on a supplementing uplink SUL carrier;
an UL on a first cell group CG;
an UL on a first carrier; and
an UL on a first cell.

15. The method according to claim 14, wherein the UL corresponding to the PUSCH comprises at least one of the following:

an UL scheduled by a downlink control information DCI format 0-0;
an UL transmitted on a configured grant;

an UL without configured initial transmit power;
an UL in a case that the sounding reference signal resource indicator SRI configuration is not obtained;
an UL scheduled by DCI comprising no SRI; and
an UL corresponding to a specific number.

16. The method according to claim 14, wherein in a case that the SL transmit power is a PSFCH transmit power, the UL is a PUCCH; or

in a case that the SL transmit power is a PSCCH, PSSCH or RS transmit power, the UL is a PUSCH; or
in a case that the SL transmit power is a sidelink synchronization signal block S-SSB transmit power, the UL is a PRACH.

17. The method according to claim 14, wherein the first CG comprises at least one of the following:

a master cell group MCG;
a CG in which SL DCI is located, or a CG configured with SL DCI;
a CG in which an SL bandwidth part BWP is located, or a CG configured with an SL BWP, or a CG associated with an SL BWP; and
a CG in which an UL BWP corresponding to an SL BWP is located, or a CG configured with an UL BWP corresponding to an SL BWP, or a CG of an UL BWP which is associated with an SL BWP;
and/or
the first carrier comprises at least one of the following:

a primary carrier;
a carrier on which SL DCI is located, or a carrier configured with SL DCI;
a carrier on which an SL BWP is located, or a carrier configured with an SL BWP, or a carrier associated with an SL BWP;
a carrier on which an UL BWP corresponding to an SL BWP is located, or a carrier configured with an UL BWP corresponding to an SL BWP, or a carrier of an UL BWP which is associated with an SL BWP;
a carrier corresponding to a largest carrier identifier in carrier identifiers obtained by the terminal;
a carrier corresponding to a smallest carrier identifier in the carrier identifiers obtained by the terminal; and
a carrier corresponding to a specific carrier identifier in the carrier identifiers obtained by the terminal;
and/or
the first cell comprises at least one of the following:

a primary cell;
a cell in which SL DCI is located, or a cell configured with SL DCI;
a cell in which a specific DCI format is located, or a cell configured with a specific DCI format;
a cell in which an UL scheduled by a specific DCI format is located;
a cell in which an SL BWP is located, or a cell configured with an SL BWP, or a cell associated with an SL BWP;
a cell in which an UL BWP corresponding to an SL BWP is located, or a cell configured with an UL BWP corresponding to an SL BWP, or a cell of an UL BWP which is assoiciated with an SL BWP;
a cell corresponding to a largest cell identifier in cell identifiers obtained by the terminal;
a cell corresponding to a smallest cell identifier in the cell identifiers obtained by the terminal; and
a cell corresponding to a specific cell identifier in the cell identifiers obtained by the terminal.

18. The method according to claim 13, wherein the UL nominal power comprises:

an UL nominal power corresponding to a latest UL BWP transmission; or
an UL nominal power corresponding to a previous or last UL BWP transmission; or
an UL nominal power corresponding to a latest UL transmission; or
an UL nominal power corresponding to a previous or last UL transmission; or
an UL nominal power corresponding to a next or 1st UL BWP transmission; or
an UL nominal power corresponding to a next or 1st UL transmission.

19. The method according to claim 13, wherein the UL nominal power comprises at least one of the following:

an UL nominal power indicated by a third parameter;
a dedicated or common or cell-level power value;
a nominal power related to a grant or a nominal power with a grant;
a nominal power unrelated to a grant or a nominal power without a grant;
a preset nominal power;
a preset reference power;
a preamble reception target power; and
a power of a last PRACH transmission.

20. The method according to claim 19, wherein the method further comprises:

under a fifth condition, determining, by the terminal, the SL transmit power based on an UL nominal power of 0; or
under the fifth condition, determining, by the terminal, the SL transmit power based on an SL nominal power of 0; or
under the fifth condition, determining, by the terminal, the SL transmit power at least based on a preset SL reference power; or
under the fifth condition, determining, by the terminal, the SL transmit power at least based on the SL reference power; wherein
the fifth condition comprises at least one of the following:

the terminal has not obtained the third parameter; and
the terminal has not obtained the UL nominal power.

21. The method according to claim 13, wherein the determining, by the terminal, an SL transmit power based on the first power information comprises:

under a sixth condition, determining, by the terminal, the SL transmit power based on the UL nominal power; or
under the sixth condition, determining, by the terminal, the SL transmit power based on the UL nominal power and the SL reference power; wherein
under the sixth condition, determining, by the terminal, the SL transmit power based on the UL nominal power and a preset SL reference power; wherein
the sixth condition comprises at least one of the following:

the terminal has not obtained the first parameter indicating the SL reference power;
the terminal has not obtained a preset SL reference power;
the SL reference power is assumed to be 0; and
the terminal does not consider the SL reference power.

22. The method according to claim 1, wherein in a case that the first power information comprises the SL nominal power and the UL nominal power, the determining, by the terminal, an SL transmit power based on the first power information comprises:

determining, by the terminal, the SL transmit power based on a smaller one of the SL nominal power and the UL nominal power;
determining, by the terminal, the SL transmit power based on a larger one of the SL nominal power and the UL nominal power; and
determining, by the terminal, a first SL transmit power based on the SL nominal power, determining a second SL transmit power based on the UL nominal power, and using a smaller or larger one of the first SL transmit power and the second SL transmit power as the SL transmit power.

23. The method according to claim 1, wherein in a case that the terminal is a first terminal, the terminal determines the SL transmit power based on the first power information; and/or

in a case that the terminal is not the first terminal, the terminal determines the SL transmit power based on other power information at least partially different from the first power information; wherein
the first terminal comprises at least one of the following:

a connected-state terminal;

a terminal within a coverage of a cell;
a terminal with a serving cell;
a terminal that has obtained the first power information; and
one that has obtained a power set configuration.

24. The method according to claim 1, wherein in a case that the terminal is a first terminal, the SL reference power comprises:

a reference power corresponding to a PUSCH; or
a reference power corresponding to a PUCCH; or
a reference power corresponding to an SRS; or
0;
alternatively, in a case that the terminal is the first terminal, the SL reference power comprises:

a reference power corresponding to a PRACH; or
a reference power corresponding to a msgA; or
a reference power corresponding to a PUSCH corresponding to a message 3 msg3; or
a reference power corresponding to a PUSCH corresponding to msgB; wherein
the first terminal comprises at least one of the following:

a connected-state terminal;
a terminal within a coverage of a cell; and
a terminal that has obtained a power set configuration;
and/or
in a case that the terminal is a second terminal, the SL reference power comprises:

a reference power corresponding to a PRACH; or
a reference power corresponding to a msgA; or
a reference power corresponding to a PUSCH corresponding to a message 3 msg3; or
a reference power corresponding to a PUSCH corresponding to msgB;
alternatively, in a case that the terminal is a second terminal, the SL reference power comprises:

a reference power corresponding to a PUSCH; or
a reference power corresponding to a PUCCH; or
a reference power corresponding to an SRS; or
0; wherein
the second terminal comprises at least one of the following:

an idle-state terminal;
a terminal outside a coverage of a cell;
a terminal that has not identified a serving cell;
a terminal that has not obtained the first power information; and
a terminal that has not obtained a power set configuration.

25. The method according to claim 1, wherein in a case that the terminal is a first terminal, the UL nominal power comprises:

a nominal power corresponding to a PUSCH; or
a nominal power corresponding to a PUCCH; or
0;
alternatively, in a case that the terminal is a first terminal, the UL nominal power comprises:

a nominal power corresponding to a PRACH; or
a nominal power corresponding to msgA; or
a nominal power corresponding to a PUSCH corresponding to a message 3 msg3; or
a nominal power corresponding to a PUSCH corresponding to msgB; wherein
the first terminal comprises at least one of the following:

a connected-state terminal;

a terminal with a serving cell;

a terminal within a coverage of a cell; and

one that has obtained a power set configuration;

and/or

in a case that the terminal is a second terminal, the UL nominal power comprises:

a nominal power corresponding to a PRACH; or

a nominal power corresponding to msgA; or

a nominal power corresponding to a PUSCH corresponding to a message 3 msg3; or

a nominal power corresponding to a PUSCH corresponding to msgB;

alternatively, in a case that the terminal is a second terminal, the UL nominal power comprises:

a nominal power corresponding to a PUSCH; or

a nominal power corresponding to a PUCCH; or

a nominal power corresponding to an SRS; or

0; wherein

the second terminal comprises at least one of the following:

an idle-state terminal;

a terminal outside a coverage of a cell;

a terminal that has not identified a serving cell;

a terminal that has not obtained the first power; and

a terminal that has not obtained a power set configuration.

26. The method according to claim 1, wherein the SL reference power comprises:
a product of a reference power indicated by a fourth parameter and Y1, wherein Y1 is a positive real number.

27. The method according to claim 1, wherein the determining, by the terminal, an SL transmit power based on the first power information comprises:
determining, by the terminal, the SL transmit power based on a product of the first power information and Y2, wherein Y2 is a positive real number.

28. The method according to claim 1, wherein the first power information is power information corresponding to a target resource pool; the target resource pool is a resource pool for an SL channel or signal to be transmitted is located, or the target resource pool is a resource pool corresponding to an SL maximum transmit power used during determining of a transmit power.

29. A transmit power determining method, comprising:

determining or obtaining, by a terminal, a sidelink SL maximum transmit power; and
determining, by the terminal, a transmit power of a first channel or a first signal based on the SL maximum transmit power, wherein the first channel or the first signal comprises at least one of a sidelink primary synchronization signal S-PSS, a sidelink secondary synchronization signal S-SSS, and a physical sidelink broadcast channel PSBCH; wherein
the SL maximum transmit power comprises at least one of the following:

an SL maximum transmission power corresponding to a first resource pool;
an SL maximum transmit power corresponding to the first resource pool;
a maximum Uu interface transmit power; and
a maximum transmit power of the first channel or the first signal.

30. The method according to claim 29, wherein the determining, by the terminal, a transmit power of a first channel or a first signal based on the SL maximum transmit power comprises:

determining, by the terminal, the transmit power of the first channel or the first signal based on the SL maximum transmit power and a first power; wherein
the first power is a second transmit power of the first channel or the first signal obtained through calculation by the terminal based on a formula.

31. The method according to claim 30, wherein the determining, by the terminal, the transmit power of the first channel or the first signal based on the SL maximum transmit power and a first power comprises:
determining, by the terminal, a smaller one of the SL maximum transmit power and the first power as the transmit power of the first channel or the first signal.

32. The method according to claim 29, wherein the first resource pool comprises at least one of the following:

a resource pool corresponding to a largest resource pool identifier in resource pool identifiers obtained by the terminal;
a resource pool corresponding to a smallest resource pool identifier in the resource pool identifiers obtained by the terminal;
a resource pool corresponding to a specific resource pool identifier in the resource pool identifiers obtained by the terminal;
a resource pool whose frequency domain resources overlap with a frequency domain resource of the first channel or the first signal;
a neaerest resource pool;
a previous or last resource pool before a time domain resource of the first channel or the first signal;
a next or 1st resource pool after the time domain resource of the first channel or the first signal;
a resource pool with a largest or smallest SL transmit power in resource pools corresponding to the terminal;
a resource pool with a largest channel busy rate CBR value in the resource pools corresponding to the terminal;
a resource pool with a smallest CBR value in the resource pools corresponding to the terminal;
a resource pool corresponding to a specific CBR value in the resource pools corresponding to the terminal;
a resource pool with a largest channel occupancy ratio CR value in the resource pools corresponding to the terminal;
a resource pool with a smallest CR value in the resource pools corresponding to the terminal;
a resource pool corresponding to a specific CR value in the resource pools corresponding to the terminal;
a resource pool with an SL maximum transmit power being greater than or equal to a first power in the resource pools corresponding to the terminal;
a resource pool with an SL maximum transmit power being less than or equal to the first power in the resource pools corresponding to the terminal; and
a resource pool with an SL maximum transmit power being closest to the first power in the resource pools corresponding to the terminal.

33. The method according to claim 29, wherein the maximum Uu interface transmit power comprises at least one of the following:

a maximum Uu interface transmit power corresponding to a second cell group CG;
a maximum Uu interface transmit power corresponding to a second carrier;
a maximum Uu interface transmit power corresponding to a second cell;
a maximum Uu interface transmit power corresponding to a latest UL BWP or UL transmission;
a maximum Uu interface transmit power corresponding to a previous or last UL BWP or UL transmission before a time domain resource of the first channel or the first signal;
a maximum Uu interface transmit power corresponding to a next or 1st UL BWP or UL transmission after the time domain resource of the first channel or the first signal;
a maximum Uu interface transmit power greater than or equal to a first power;
a maximum Uu interface transmit power less than or equal to the first power; and
a maximum Uu interface transmit power closest to the first power.

34. The method according to claim 32 or 33, wherein the time domain resource of the first channel or the first signal comprises at least one of the following:
a time domain resource for transmitting the first channel or the first signal, and a time domain resource for receiving the first channel or the first signal.

35. The method according to claim 33, wherein the second CG comprises at least one of the following:

a master cell group MCG;

a CG in which SL DCI is located, or a CG configured with SL DCI;

a CG in which an SL bandwidth part BWP is located, or a CG configured with an SL BWP, or a CG associated with an SL BWPCG of an UL BWP which is associated with an SL BWP; and

a CG in which an UL BWP corresponding to an SL BWP is located, or a CG configured with an UL BWP corresponding to an SL BWP, or a CG of an UL BWP which is associated with an SL BWP;

and/or

the second carrier comprises at least one of the following:

a primary carrier;

a carrier on which SL DCI is located, or a carrier configured with SL DCI;

a carrier on which an SL bandwidth part BWP is located, or a carrier configured with an SL BWP, or a carrier associated with an SL BWP;

a carrier on which an UL BWP corresponding to an SL BWP is located, or a carrier configured with an UL BWP corresponding to an SL BWP, or a carrier of an UL BWP which is associated with an SL BWP;

a carrier corresponding to a largest carrier identifier in carrier identifiers obtained by the terminal;

a carrier corresponding to a smallest carrier identifier in the carrier identifiers obtained by the terminal; and

a carrier corresponding to a specific carrier identifier in the carrier identifiers obtained by the terminal;

and/or

the second cell comprises at least one of the following:

a primary cell;

a cell in which SL DCI is located, or a cell configured with SL DCI;

a cell in which an SL bandwidth part BWP is located, or a cell configured with an SL BWP, or a cell associated with an SL BWP;

a cell in which an UL BWP corresponding to an SL BWP is located, or a cell configured with an UL BWP corresponding to an SL BWP, or a cell associated with an UL BWP of an SL BWP;

a cell in which an UL BWP corresponding to an SL BWP is located, or a cell configured with an UL BWP corresponding to an SL BWP, or a cell associated with an UL BWP of an SL BWP;

a cell corresponding to a largest cell identifier in cell identifiers obtained by the terminal;

a cell corresponding to a smallest cell identifier in the cell identifiers obtained by the terminal; and

a cell corresponding to a specific cell identifier in the cell identifiers obtained by the terminal.

36. The method according to claim 31, wherein the SL maximum transmit power comprises at least one of the following:

a largest or smallest SL maximum transmit power in SL maximum transmit powers corresponding to the terminal;

an SL maximum transmit power with a largest identifier in the SL maximum transmit powers corresponding to the terminal;

an SL maximum transmit power with a smallest identifier in the SL maximum transmit powers corresponding to the terminal;

an SL maximum transmit power with a specific identifier in the SL maximum transmit powers corresponding to the terminal;

an SL maximum transmit power greater than or equal to a first power in the SL maximum transmit powers corresponding to the terminal;

an SL maximum transmit power less than or equal to the first power in the SL maximum transmit powers corresponding to the terminal;

an SL maximum transmit power closest to the first power in the SL maximum transmit powers corresponding to the terminal;

an SL maximum transmit power corresponding to a second channel or a second signal;

an SL maximum transmit power corresponding to a first priority;

an SL maximum transmit power corresponding to a first CBR value;

an SL maximum transmit power corresponding to a first CBR range;

an SL maximum transmit power corresponding to a first CR value; and

an SL maximum transmit power corresponding to a default configuration.

37. The method according to claim 36, wherein the second channel comprises at least one of the following:

a channel with a highest priority;

a channel with a lowest priority;

a channel with a specific priority;
a PSCCH;
a PSSCH;
a PSFCH;
a RACH; and
a PUSCH;
and/or
the second signal comprises at least one of the following:
an uplink configured grant UL CG, msg3, and msg3 retransmission.

38. The method according to claim 37, wherein the PUSCH comprises at least one of the following:

a PUSCH corresponding to a configured grant;
a PUSCH configured with no reference power; and
a DCI-scheduled PUSCH not comprising a sounding reference signal resource indicator SRI.

39. The method according to claim 36, wherein the first CBR range corresponds to one transmission parameter configuration, or the first CBR range corresponds to one SL maximum transmit power; or the first CBR range corresponds to a plurality of SL maximum transmit powers, and the SL maximum transmit power is one of the plurality of SL maximum transmit powers.

40. A transmit power determining apparatus, comprising:

an information module, configured to determine or obtain first power information, wherein the first power information comprises at least one of the following: a sidelink SL reference power, an SL nominal power, and an uplink UL nominal power; and
a first determining module, configured to determine an SL transmit power based on the first power information.

41. The apparatus according to claim 40, wherein a value range of the SL reference power is [-202,24].

42. The apparatus according to claim 40, wherein the SL reference power comprises:

an SL reference power indicated by a first parameter; or
an SL reference power that is determined based on at least one of a reference power corresponding to UL and a nominal power corresponding to UL.

43. The apparatus according to claim 42, wherein the first parameter is used for at least one of the following:

indicating an SL reference power for a case that the SL transmit power is determined based on a downlink DL pathloss;
indicating an SL reference power for a case that the SL transmit power is determined based on an SL pathloss;
indicating an SL reference power of a physical sidelink shared channel PSSCH;
indicating an SL reference power of a physical sidelink control channel PSCCH;
indicating an SL reference power of a physical sidelink feedback channel PSFCH;
indicating an SL reference power of an S-PSS;
indicating an SL reference power of an S-SSS;
indicating an SL reference power of a physical sidelink broadcast channel PSBCH; and
indicating an SL reference power of a reference signal RS.

44. The apparatus according to claim 42 or 43, wherein the determining an SL transmit power based on the first power information comprises:
if the first parameter is obtained, determining the SL transmit power at least based on the SL reference power.

45. A transmit power determining apparatus, comprising:

a power module, configured to determine or obtain a sidelink SL maximum transmit power; and
a determining module, configured to determine a transmit power of a first channel or a first signal based on the SL maximum transmit power, wherein the first channel or the first signal comprises at least one of a sidelink primary synchronization signal S-PSS, a sidelink secondary synchronization signal S-SSS, and a physical sidelink broadcast channel PSBCH; wherein
the SL maximum transmit power comprises at least one of the following:

an SL maximum transmission power corresponding to a first resource pool;
an SL maximum transmit power corresponding to the first resource pool;
a maximum Uu interface transmit power; and
a maximum transmit power of the first channel or the first signal.

46. A terminal, comprising a processor and a memory, wherein a program or instructions capable of running on the processor are stored in the memory, and when the program or instructions are executed by the processor, the steps of the transmit power determining method according to any one of claims 1 to 28 are implemented, or when the program or instructions are executed by the processor, the steps of the transmit power determining method according to any one of claims 29 to 39 are implemented.

47. A readable storage medium, wherein the readable storage medium stores a program or instructions, and when the program or instructions are executed by a processor, the steps of the transmit power determining method according to any one of claims 1 to 28 are implemented, or when the program or instructions are executed by a processor, the steps of the transmit power determining method according to any one of claims 29 to 39 are implemented.

FIG. 1

Start

A terminal determines or obtains first power information — 201

The terminal determines an SL transmit power based on the first power information — 202

End

FIG. 2

Start

A terminal determines or obtains a sidelink SL maximum transmit power — 301

The terminal determines a transmit power of a first channel or a first signal based on the SL maximum transmit power — 302

End

FIG. 3

— 400

Information module — 401

First determining module — 402

Transmit power determining apparatus

FIG. 4

500

Transmit power determining apparatus

Power module — 501

Determining module — 502

FIG. 5

600

Communication device

601 — Processor ⟺ Memory — 602

FIG. 6

700

Terminal

| | |
|---|---|
| 701 — Radio frequency unit | Network module — 702 |
| | |
| Memory | |
| 709 — Application program | Audio output unit — 703 |
| Operating system | 704 |
| | Input unit |
| 708 — Interface unit | Graphics processing unit — 7041 |
| 707 — User input unit | Microphone — 7042 |
| 7071 — Touch panel | 706 |
| | Display unit |
| 7072 — Other input devices | Display panel — 7061 |

710 — Processor

Sensor — 705

FIG. 7

## INTERNATIONAL SEARCH REPORT

| International application No. |
| --- |
| **PCT/CN2023/111192** |

| | |
| --- | --- |
| **A.** | **CLASSIFICATION OF SUBJECT MATTER** |
| | H04W 52/18(2009.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, DWPI: 边, 侧, 旁, 链路, 初始, 额定, 基础, 基准, 名义, 功率, 发送, 确定, sidelink, sl, base, initial, nominal, P0, Power, Initial Transmit Power, send+, determin+, transmit+

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 111800849 A (VIVO MOBILE COMMUNICATION CO., LTD.) 20 October 2020 (2020-10-20) description, paragraphs [0025]-[0215] | 1-28, 40-44, 46-47 |
| X | CN 111436110 A (HUAWEI TECHNOLOGIES CO., LTD.) 21 July 2020 (2020-07-21) description, paragraphs [0068]-[0084] | 1-28, 40-44, 46-47 |
| A | US 2022110074 A1 (GUANGDONG OPPO MOBILE TELECOMMUNICATIONS CORP., LTD.) 07 April 2022 (2022-04-07) entire document | 1-28, 40-44, 46-47 |
| A | US 2022110075 A1 (GUANGDONG OPPO MOBILE TELECOMMUNICATIONS CORP., LTD.) 07 April 2022 (2022-04-07) entire document | 1-28, 40-44, 46-47 |
| A | VIVO. "Discussion on Configured Transmitted Power for SL" *3GPP TSG-RAN WG4 Meeting #103-e R4-2208613*, 20 May 2022 (2022-05-20), entire document | 1-28, 40-44, 46-47 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 October 2023** | **02 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/111192** |

**Box No. III    Observations where unity of invention is lacking (Continuation of item 3 of first sheet)**

This International Searching Authority found multiple inventions in this international application, as follows:

Invention I: Claims 1-28, 40-44 and 46-47 (when referring to claims 1-28)

Invention II: Claims 29-39, 45 and 46-47 (when referring to claims 29-39)

Invention I relates to a terminal determining the transmission power of an SL on the basis of the first power information. Invention II relates to a terminal determining the transmission power of a first channel or a first signal on the basis of the SL maximum transmission power. The same or corresponding technical feature "terminal" between inventions I and II is a customary means in the art. Therefore, inventions I-II do not have a same or corresponding special technical feature. Therefore, inventions I-II do not comply with the requirement of unity of invention (PCT Rule 13.1).

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-28, 40-44 and 46-47**

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

| International application No. |
| --- |
| **PCT/CN2023/111192** |

| Patent document cited in search report | | | Publication date (day/month/year) | Patent family member(s) | | | Publication date (day/month/year) |
| --- | --- | --- | --- | --- | --- | --- | --- |
| CN | 111800849 | A | 20 October 2020 | WO | 2021027545 | A1 | 18 February 2021 |
| | | | | KR | 20220046609 | A | 14 April 2022 |
| | | | | EP | 4013137 | A1 | 15 June 2022 |
| | | | | IN | 202227011057 | A | 15 July 2022 |
| | | | | US | 2022232490 | A1 | 21 July 2022 |
| CN | 111436110 | A | 21 July 2020 | WO | 2020143632 | A1 | 16 July 2020 |
| US | 2022110074 | A1 | 07 April 2022 | WO | 2021026715 | A1 | 18 February 2021 |
| | | | | CN | 113994742 | A | 28 January 2022 |
| US | 2022110075 | A1 | 07 April 2022 | WO | 2021003614 | A1 | 14 January 2021 |
| | | | | CN | 114073147 | A | 18 February 2022 |

Form PCT/ISA/210 (patent family annex) (July 2022)

**EP 4 572 430 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210956557